# EUROPEAN PATENT SPECIFICATION

(11) **EP 4 508 278 B1**
(45) Date of publication and mention of the grant of the patent: **28.01.2026**
(21) Application number: 22719374.5
(22) Date of filing: 14.04.2022
(51) Int. Cl.: E02F 9/20, E21C 41/16, G01S 5/14, G01S 13/87

(54) **METHOD AND SYSTEM FOR RELATIVE POSITIONING OF RELATIVELY MOVABLE MACHINE UNITS FOR LOADING**
VERFAHREN UND SYSTEM ZUR RELATIVEN POSITIONIERUNG VON RELATIV BEWEGLICHEN MASCHINENEINHEITEN ZUM LADEN
PROCÉDÉ ET SYSTÈME DE POSITIONNEMENT RELATIF D'UNITÉS DE MACHINE RELATIVEMENT MOBILES POUR CHARGEMENT

(43) Date of publication of application: 19.02.2025
(73) Proprietor: Epiroc Rock Drills Aktiebolag, 701 91 Örebro (SE)
(72) Inventor: LANDMARK, Nicklas, 719 30 Vintrosa (SE)
(74) Representative: Epiroc Rock Drills AB
(86) International application number: PCT/SE2022/050376
(87) International publication number: WO 2023/200380

(56) References cited:
- WO-A1-2017/063018
- CN-A- 113 463 718
- US-A1- 2010 127 853
- US-B2- 7 656 311

## Description

### Technical field

The present invention relates generally to methods and systems for relative positioning of relatively movable machine units for loading. The present invention further relates to a movable machine comprising such system.

### Background

Indoor positioning in general provides challenges due to the unavailability of GPS signals. In an underground mining environment, further positioning challenges arise following the constantly changing nature of such environment as new tunnels are formed and piles of mining material, ore, gravel, rocks etc. are constantly created in new areas and transported within the mine. Mining tunnels are narrow, large enough only to fit the large mining machines. The mining machines themselves are made of steel, and thus both the mining machines and often the mining material contains iron. As a result, positioning signals are obstructed and weakened for a multitude of reasons and cannot travel long distances within the environment, which makes positioning difficult.

The use of radio frequency identification (RFID) systems, or other systems (e.g. Wi-Fi) using similar radio frequency tags and readers for positioning in an underground environment require an installation of a large number of fixed readers, often referred to as anchors, for localization of equipment and machines provided with the radio tags. Thus, such system requires a large and expensive infrastructure of readers, which needs to be expanded together with the forming of new tunnels, i.e. together with the expansion of the mine itself. Further, part of the changing nature of the underground mining environment, is due to the deliberate destruction or abandonment of existing tunnels followed by the creation of new tunnels when the mine is expanded. Investments in positioning infrastructure that no longer will or can be used or which alternatively need to be repositioned within the mine will increase the total cost of operating the mine. In certain areas of the mine which lack infrastructure, positioning will not be possible or difficult. Furthermore, the positioning based on proximity between tags and readers provides only a rough indication of the position on a map. Furthermore, so -called real time localization systems require remote central localization servers for carrying out processing and positioning calculations, which are located physically distant from the location of the devices or machines being positioned. This tend to increase lag and latency in the system, which is undesirable in e.g. navigation that is dependent on real-time and accurate positioning information for navigation for carrying out specific tasks.

Common tasks in a underground mining operation involve the so-called load, haul, dump (LHD) mining machines. The load operation, where a load machine with a bucket, also referred to as a scoop, loads ore from a draw point in the mine onto a haul- or dump machine or truck, requires a precise navigation and positioning of the load machine, also referred to as a loader, in relation to the haul- or dump machine. The navigation is challenging due to the size of the machines, the obstructed visibility due to the bucket and small machine cabin, or, in the case of a remote controlled or operated machine due to the restricted viewpoint of a camera of such remote-controlled system, the narrowness inside the mine and tunnels etc. At the same time, collision avoidance is critical as the mass of the machines may inflict damage to other machines even at low speed, which may cause costly delays in the workflow as well as costly repairs.

The use of complex scanners such as LIDARs or RADARs as opposed to radio signals for positioning may provide a higher accuracy of a position of a machine, machine units or equipment in the mining environment, however, such technology is both expensive and very sensitive to dust and dirt. They require continuous maintenance and cleaning to function properly, a fact that reduces their reliability during operation in a mining environment.

### Summary

It is an object of the present invention to address at least some of the problems and issues outlined above. An object of embodiments of the invention is to provide a method and system for relative positioning of relatively movable machine units for loading which does not require a large positioning infrastructure. A further object of the present invention is to provide a method and system for relative positioning of a machine for loading which is more robust, reliable and cheaper to manufacture and maintain. It may be possible to achieve these objects, and others, by using methods, systems and computer programs as defined in the attached independent claims.

According to one aspect, a method performed by a system for relative positioning of relatively movable machine units for loading is provided, comprising at least a first positioning device, a second positioning device and a third positioning device, each configured to receive and transmit positioning signals comprising positioning data, arranged at a first, second and third predefined local position on a first machine unit of a movable machine, respectively, the method comprising: receiving via the first positioning device a first positioning signal from a first remote positioning device arranged at a first remote position relatively movable in relation to the first, second and third predefined local position, on a first remote machine unit, receiving via the second positioning device a second positioning signal from the first remote positioning device, receiving via the third positioning device a third positioning signal from the first remote positioning device, receiving first remote machine unit data from the first remote positioning device comprising data for identification of the first remote machine unit and a predefined local position of the first remote positioning device on the first remote machine unit, determining first, second and third range data, based on the first, second and third positioning signal, respectively, determining a relative position of the first remote positioning device to the first, second and third predefined local position, respectively, based on the first, second and third range data, mapping first machine unit data and first remote machine unit data comprising predefined geometries of the first machine unit and the first remote machine unit, respectively, in a relative position, based on the relative position of the first remote positioning device to the first, second and third predefined local position, respectively, and the predefined local position of the first remote positioning device on the first remote machine unit.

By providing a method performed by a system using three positioning devices arranged on predefined local positions on a first machine unit and determine range data from a first remote positioning device to these, a relative positioning of a relatively movable first remote positioning device arranged on a first remote machine unit is provided that does not require further fixed infrastructure in the mining environment. Since the method provides the sharing of machine unit data comprising the predefined local position of the first remote positioning device on the first remote machine unit, as well as predefined geometries of the machine units, the method provides a capacity of mapping the relatively movable machine units in relation to each other at least in some embodiments. This mapping is e.g. suitable in a loading process where the relative position of the machine units is critical in order to avoid collision between the machine units.

According to one embodiment, the method further comprising receiving via the first positioning device a fifth positioning signal from a second remote positioning device arranged at a second remote position relatively movable in relation to the first, second and third predefined local position, on the first remote machine unit, receiving via the second positioning device a sixth positioning signal from the second remote positioning device, receiving via the third positioning device a seventh positioning signal from the second remote positioning device, receiving first remote machine unit data from the second remote positioning device comprising data for identification of the predefined local position of the second remote positioning device in the first remote machine unit, determining fifth, sixth and seventh range data, based on the fifth, sixth and seventh positioning signal, respectively, determining a relative position of the second remote positioning device to the first, second and third predefined local position, respectively, based on the fifth, sixth and seventh range data, mapping first machine unit data and first remote machine unit data comprising predefined geometries of the first machine unit and the first remote machine unit, respectively, in a relative position, further based on the relative position of the second remote positioning device to the first, second and third predefined local position, respectively, and the predefined local position of the second remote positioning device on the first remote machine unit.

By providing system with a second remote positioning device on the first remote machine unit, a relative positioning and mapping of any type of first remote machine unit is achieved.

According to one embodiment, the first remote machine unit is directly or indirectly connected to the first machine unit, and the first machine unit and the first remote machine unit are comprised in the movable machine.

According to one embodiment, the first remote machine unit is comprised in a remote movable machine, separate from the movable machine.

According to one embodiment, the method further comprising receiving via the first positioning device an eighth positioning signal from a third remote positioning device arranged at a third remote position relatively movable in relation to the first, second and third predefined local position, on a second remote machine unit, receiving via the second positioning device a ninth positioning signal from the third remote positioning device, receiving via the third positioning device a tenth positioning signal from the third remote positioning device, receiving second remote machine unit data from the third remote positioning device comprising data for identification of the second remote machine unit and a predefined local position of the third remote positioning device on the second remote machine unit, determining eighth, ninth and tenth range data, based on the eighth, ninth and tenth positioning signal, respectively, determining a relative position of the third remote positioning device to the first, second and third predefined local position, respectively, based on the eighth, ninth and tenth range data, mapping first machine unit data and second remote machine unit data comprising predefined geometries of the first machine unit and the second remote machine unit, respectively, in a relative position, based on the relative position of the third remote positioning device to the first, second and third predefined local position, respectively, and the predefined local position of the third remote positioning device on the second remote machine unit.

By providing a system with a third remote positioning device on a second remote machine unit, the system may determine a relative position of a further, i.e. a second remote machine unit.

According to one embodiment, the second remote machine unit is directly or indirectly connected to the first machine unit, and the second remote machine unit is comprised in the movable machine.

According to one embodiment, the second remote machine unit is comprised in a remote movable machine, separate from the movable machine.

According to one embodiment, the method further comprising determining an operational relative position of the first machine unit and the first remote machine unit and/or the second remote machine unit, determining driving operating parameters for a driving arrangement, for driving the movable machine to the operational relative position, determining steering operating parameters for a steering arrangement, for steering the movable machine (10) to the operational relative position, transmitting the driving operating parameters and steering operating parameters to the driving arrangement and steering arrangement respectively, for activating the driving arrangement and steering arrangement, respectively.

According to one embodiment, the operational relative position is based on an assignment task of the movable machine requiring interaction with the remote movable machine, wherein the driving operating parameters, and steering operating parameters are determined to avoid overlap between the mapped predefined geometries of the first machine unit, the first remote machine unit and/or the second remote machine unit.

According to one embodiment, any or all of the first, second, and third positioning device, and first, second and third remote positioning device is a Radio Frequency (RF) signal transceiver.

According to one embodiment, the first to tenth range data each comprises a range between the first remote positioning device, the second remote positioning device or the third remote positioning device and the first, second and third positioning device, respectively, wherein any of the first to tenth range is determined using Time of Flight (ToF) calculations.

According to one embodiment, the first to third and fifth to tenth range data each comprises a range between the first remote positioning device, the second remote positioning device or the third remote positioning device and the first, second and third positioning device, respectively, wherein any of the first to third, and fifth to tenth range is determined using Time of Flight (ToF) calculations.

According to one embodiment, determining a relative position of the first remote positioning device, and/or the second remote positioning device and/or the third remote positioning device to the first, second and third predefined local position, respectively, is carried out using trilateration or multilateration calculations.

According to one embodiment, the movable machine is a mining machine, such as any of a so-called load, haul and dump (LHD) machine.

According to one embodiment, the movable machine is a load machine, and the remote movable machine is a haul or dump machine.

According to one embodiment, the first, second and third predefined local positions are positions in a local coordinate system of the first machine unit, and the relative positions to the first, second and third predefined local positions, are positions in the local coordinate system of the first machine unit.

According to one embodiment, the first remote machine unit data and/or second remote machine unit data comprising predefined geometries of the first remote machine unit and second remote machine unit, respectively, is stored locally in the first machine unit.

According to one embodiment, the predefined geometries comprises three-dimensional (3D) geometries of the first machine unit, and the first and second remote machine unit, respectively.

According to one embodiment, the first remote machine unit and/or second remote machine unit is articulately connected to the first machine unit.

According to one embodiment, the first machine unit comprises the driving arrangement for driving the movable machine.

According to one embodiment, the system further comprises a fourth positioning device, configured to receive and transmit positioning signals comprising positioning data, arranged at a fourth predefined local position in the first machine unit, the method further comprising: receiving via the fourth positioning device a fourth positioning signal from the first remote positioning device, determining fourth range data, based on the fourth positioning signal, determining a relative position in space of the first remote positioning device to the first, second, third and fourth predefined local position, respectively, based on the first, second third and fourth range data, mapping first machine unit data and remote machine unit data comprising predefined three-dimensional (3D) geometries of the first machine unit and the first remote machine unit, respectively, based on the relative position in space of the first remote positioning device to the first, second, third and fourth predefined local position, respectively, and the local predefined position of the first remote positioning device in the remote machine unit.

By providing a system with a fourth positioning device, the system may provide a higher accuracy in determining the spatial position of the remote positioning devices. According to one embodiment, a fourth positioning device enables the relative positioning in space of a remote positioning device.

According to one embodiment, the first, second and third range data comprises a first, second and third range difference, respectively, between the first remote positioning device and each pair of the first, second and third positioning device, respectively, wherein the first, second and third range difference is determined using Time Difference of Arrival (TDoA) calculations.

According to one embodiment, the Radio Frequency (RF) signal transceiver is an Ultra-Wideband (UWB) signal transceiver.

According to one embodiment, the first, second, and third positioning device, and first and second remote positioning device is a mobile tag.

According to one embodiment, the method further comprising: graphically representing the mapping on a display unit.

According to one embodiment, the method is a method performed by a system for relative positioning of relatively movable machine units for autonomous loading.

According to one aspect, a system for relative positioning of a relatively movable machine units for loading, comprising at least a first positioning device, a second positioning device and a third positioning device, each configured to receive and transmit positioning signals comprising positioning data, arranged at a first, second and third predefined local position on a first machine unit of a movable machine, respectively, the system comprising: processing circuitry and a memory, said memory containing instructions executable by said processing circuitry, whereby said system is operative for: receiving via the first positioning device a first positioning signal from a first remote positioning device arranged at a first remote position relatively movable in relation to the first, second and third predefined local position, on a first remote machine unit, receiving via the second positioning device a second positioning signal from the first remote positioning device, receiving via the third positioning device a third positioning signal from the first remote positioning device, receiving first remote machine unit data from the first remote positioning device comprising data for identification of the first remote machine unit and a predefined local position of the first remote positioning device on the first remote machine unit, determining first, second and third range data, based on the first, second and third positioning signal, respectively, determining a relative position of the first remote positioning device to the first, second and third predefined local position, respectively, based on the first, second and third range data, mapping first machine unit data and first remote machine unit data comprising predefined geometries of the first machine unit and the first remote machine unit, respectively, in a relative position, based on the relative position of the first remote positioning device to the first, second and third predefined local position, respectively, and the predefined local position of the first remote positioning device on the first remote machine unit.

According to one embodiment, the system is further operative for performing the method according to any of the embodiments of paragraphs [0009], [0011]-[0013], [0015]-[0036].

According to one embodiment, the system is a system for relative positioning of relatively movable machine units for autonomous loading.

According to one aspect a computer program readable code means to be run in a system for relative positioning of relatively movable machine units for loading is provided, which computer readable code means when run in the system causes the system to carry out the method according to any of the embodiments of paragraphs [0007], [0009], [0011]-[0013], [0015]-[0036].

According to one aspect, a carrier containing the computer program according to paragraph [00040] is provided, wherein the carrier is one of an electronic signal, optical signal, radio signal or computer readable storage medium.

According to one aspect, a movable machine comprising a system for relative positioning of a relatively movable machine units for loading according to any of the embodiments of paragraphs [0037]-[0039] is provided.

### Brief description of drawings

The invention will now be described in more detail by means of exemplary embodiments and with reference to the accompanying drawings, in which:
Fig. 1a shows a side view of a movable machine comprising a system for relative positioning of relatively movable machine units for loading according to an embodiment.
Fig. 1b shows a side view of a movable machine comprising a system for relative positioning of relatively movable machine units according to an embodiment.
Fig. 2 shows a side view of a movable machine comprising a system for relative positioning of relatively movable machine units according to an embodiment.
Fig. 3a shows a side view of a remote movable machine comprising a system for relative positioning of relatively movable machine units according to an embodiment.
Fig. 3b shows a side view of a remote movable machine comprising a system for relative positioning of relatively movable machine units according to an embodiment.
Fig. 4 shows a side view of a remote movable machine comprising a system for relative positioning of relatively movable machine units according to an embodiment.
Fig. 5 shows a side view of a movable machine and a remote movable machine comprising a system for relative positioning of relatively movable machine units according to embodiments of the invention, respectively.
Fig. 6 shows a mapping of first machine unit data and first remote machine unit data comprising predefined geometries of a first machine unit and a first remote machine unit, respectively, in a relative position, according to embodiments of the invention.
Fig. 7 shows a mapping of first machine unit data and first remote machine unit data comprising predefined three-dimensional (3D) geometries of the first machine unit and the first remote machine unit, respectively according to embodiments of the invention.
Fig. 8a shows a flow chart schematically showing method steps of an embodiment of a method performed by a system for relative positioning of relatively movable machine units.
Fig. 8b shows a flow chart schematically showing method steps of an embodiment of a method performed by a system for relative positioning of relatively movable machine units.
Fig. 9a shows a flow chart schematically showing method steps of an embodiment of a method performed by a system for relative positioning of relatively movable machine units.
Fig. 9b shows a flow chart schematically showing method steps of an embodiment of a method performed by a system for relative positioning of relatively movable machine units.
Fig. 10 shows a flow chart schematically showing method steps of an embodiment of a method performed by a system for relative positioning of relatively movable machine units.
Fig. 11 shows a block schematic of a system 100 according to an embodiment of the invention.

### Detailed description

In the following, a detailed description of the invention will be given. In the drawing figures, like reference numerals designate identical or corresponding elements throughout the several figures. It will be appreciated that these figures are for illustration only and are not in any way restricting the scope of the invention.

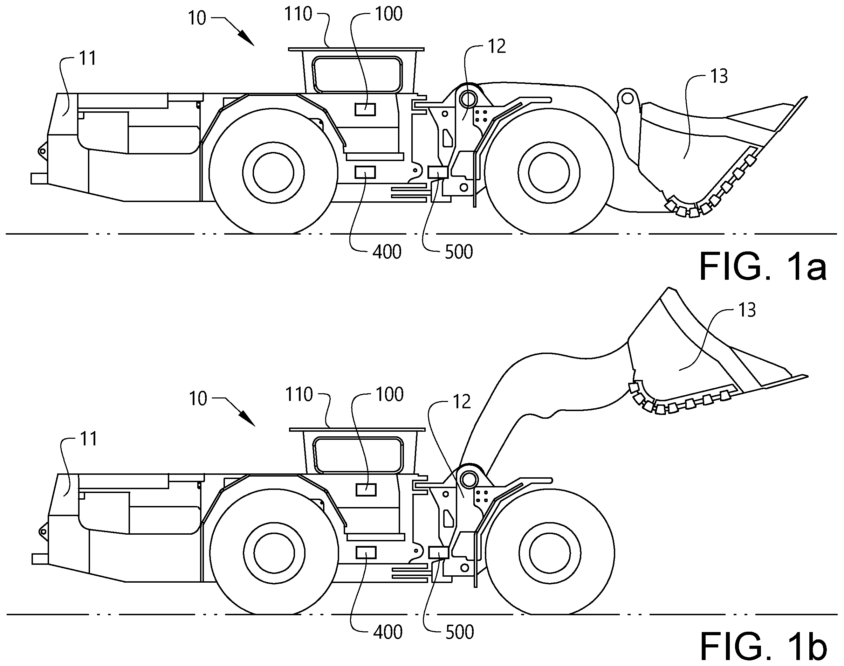

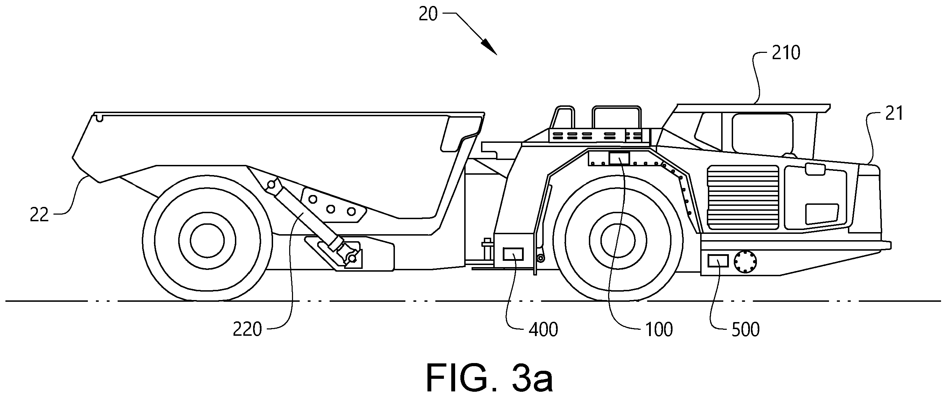

Fig. 1a shows a side view of a movable machine 10 comprising a system 100 for relative positioning of relatively movable machine units 11, 12, 13, 21, 22 for loading. The system 100 may comprise one of e.g. the following: a TEM (Telematics Module), a CEM (Central Electronic Module) or an ECU (Electronic Control Module). What is referred to as system 100 throughout this patent application may also be known as a node. According to one embodiment, the system 100 is a system 100 for relative positioning of relatively movable machine units 11, 12, 13, 21, 22 for autonomous loading. Further, relatively movable machine units 21, 22 are further seen in e.g. Fig. 3a. According to one embodiment the system 100 is for autonomous loading. According to one embodiment, autonomous loading is carried out using at least one autonomous machine for loading. According to one embodiment, autonomous loading is carried out using autonomous machines for the loading. According to one embodiment, the system 100 is a system 100 for relative positioning of relatively movable machine units 11, 12, 13, 21, 22 for loading in an underground mining environment. According to one embodiment, relatively movable comprises a movement of at least one movable machine unit 11, 12, 13, 21, 22 in relation to another machine unit 11, 12, 13, 21, 22 that is not movable or at least not moving. According to one embodiment, relatively movable comprises a movement of at least one movable machine unit 11, 12, 13, 21, 22 in relation to another machine unit 11, 12, 13, 21, 22 that is movable. According to one embodiment, the movable machine 10 is a mining machine, such as any of a so-called load, haul and dump (LHD) machine. According to one embodiment, the movable machine 10 as seen in Fig. 1a, is a load machine comprising a bucket 13 or scoop 13. According to one embodiment, the movable machine 10 comprises a driver's cabin 110. According to one embodiment, loaders or load machines are large, typically tire-mounted vehicles with a deep, wide bucket 13 mounted at the front. Loaders are used to load mined material into haul trucks and feeders, push or dump overburden, and manage stockpile or refuse areas. In sand and gravel operations, loaders may also be used for excavation. According to one embodiment, dump trucks, or off-highway dumpers, or dump machines, are construction vehicles with a wide hydraulically operated dump bed. They are intended for transporting masses over difficult terrain and are often used in connection with major earthworks. According to one embodiment, haul trucks, or "haulers," or haul machines, are tire-mounted vehicles with a deep, wide hydraulically operated dump bed commonly used to transport and place large volumes of mined material from a pit to stockpiles. According to some embodiments, the expression "mining machines" as used in the present disclosure may include: drilling rigs; excavators, shovels, draglines, bulldozers, loaders, scrapers, skid steers, graders, dump trucks, haul trucks, tank vehicles, water vehicles, forklifts, human transport, cranes, conveyor systems, classifiers, crushers and multi purpose vehicles.

According to one embodiment, the movable machine 10 comprises a driving arrangement 400, for driving the movable machine 10. According to one embodiment, the driving arrangement 400 comprises a propulsion unit configured to provide mobility of the movable machine 10. According to one embodiment, the first machine unit 11 comprises the driving arrangement 400 for driving the movable machine 10. According to one embodiment, the movable machine 10 comprises a steering arrangement 500, for steering the movable machine 10. According to one embodiment, the movable machine 10 comprises a first machine unit 11 and a first remote machine unit 12. According to one embodiment, the first remote machine unit 12 is directly or indirectly connected to the first machine unit 11, and the first machine unit 11 and the first remote machine unit 12 are comprised in the movable machine 10. According to one embodiment, remote refers to being relatively movable. According to one embodiment, remote refers to being relatively movable in relation to a first machine unit 11. According to one embodiment, remote refers to being movable in relation to a local coordinate system (x, y, z) of the first machine unit 11 as will be further described below.

According to one embodiment, the movable machine 10 comprises a second remote machine unit 13. According to one embodiment, the second remote machine unit 13 is directly or indirectly connected to the first machine unit 11, and the second remote machine unit 13 is comprised in the movable machine 10. According to one embodiment, the first remote machine unit 12 is articulately connected to the first machine unit 11. According to one embodiment, the second remote machine unit 13 is articulately connected to the first machine unit 11. According to one embodiment, the second remote machine unit 13 is articulately connected to the first remote machine unit 12.

Fig. 1b shows a side view of a movable machine 10 comprising a system 100 for relative positioning of relatively movable machine units 11, 12, 13, 21, 22 for loading according to Fig 1a, wherein the second remote machine unit 13 comprises a bucket or scoop that has been lifted to a lift position e.g. as part of a load operation.

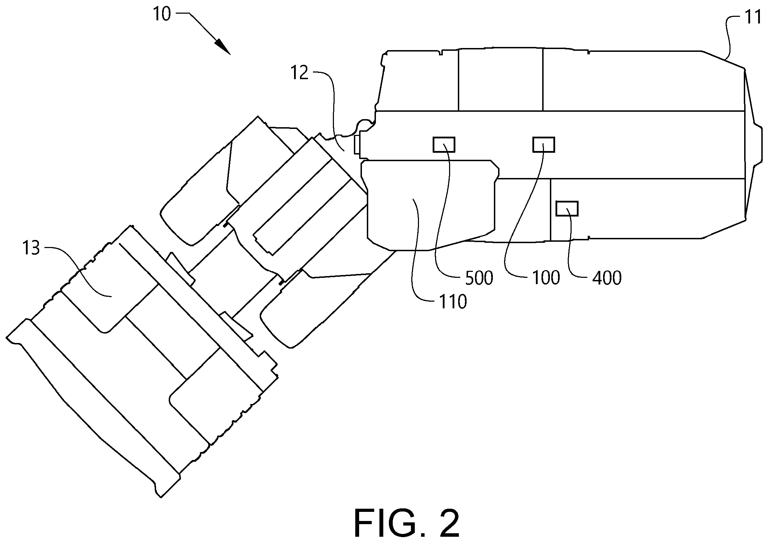

Fig. 2 shows a side view, seen from above, of a movable machine 10 comprising a system 100 for relative positioning of relatively movable machine units 11, 12, 13, 21, 22 for loading according to Fig 1a, wherein the first remote machine unit 12 is articulated in relation to the first machine unit 11. According to one embodiment, the articulated position of the first remote machine unit 12 results from a steering of the movable machine 10.

Fig. 3a shows a side view of a remote movable machine 20 comprising a system 100 for relative positioning of relatively movable machine units 11, 12, 13, 21, 22 for loading according to one embodiment of the invention. According to one embodiment, the remote movable machine 20 is separate from the movable machine 10. According to one embodiment, remote refers to being relatively movable in relation to the movable machine 10.

According to one embodiment, the remote movable machine 20 is a mining machine, such as any of a so-called load, haul and dump (LHD) machine. According to one embodiment, the remote movable machine 20 as seen in Fig. 3a, is a haul or dump machine. According to one embodiment, the first movable machine 10 is a load machine, and the remote movable machine 20 is a haul or dump machine.

According to one embodiment, the remote movable machine 20 comprises a driving arrangement 400, for driving the remote movable machine 20. According to one embodiment, the first machine unit 21 comprises the driving arrangement 400 for driving the remote movable machine 20. According to one embodiment, the remote movable machine 20 comprises a steering arrangement 500, for steering the remote movable machine 20. According to one embodiment, the remote movable machine 20 comprises a first remote machine unit 21. According to one embodiment, the remote movable machine 20 comprises solely a first remote machine unit 21. According to one embodiment, the remote movable machine 20 comprises a second remote machine unit 22. According to one embodiment, the remote movable machine 20 comprises solely a second remote machine unit 21. According to one embodiment, the remote movable machine 20 comprises a first remote machine unit 21 and a second remote machine unit 22. According to one embodiment, the first remote machine unit 21 is articulately connected to the second remote machine unit 22.

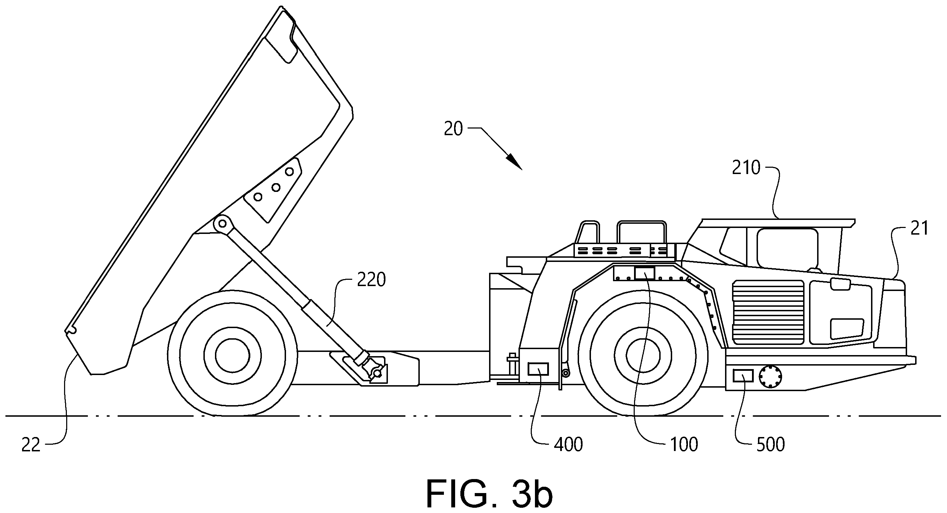

Fig. 3b shows a side view of a remote movable machine 20 comprising a system 100 for relative positioning of relatively movable machine units 11, 12, 13, 21, 22 for loading according to Fig. 3a, wherein the second remote machine unit 22 comprises a box that has been lifted to a lift position e.g. as part of a dump operation for dumping or releasing material located in the box. According to one embodiment, the box 22 has been lifted to a lift position by a hydraulic lift arrangement 220. According to one embodiment, the remote movable machine 20 comprises a driver's cabin 210.

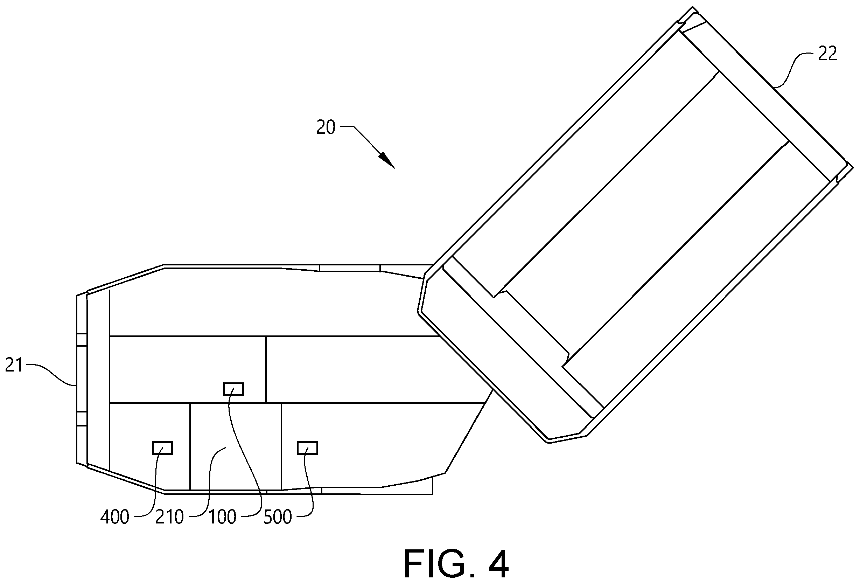

Fig. 4 shows a side view, seen from above, of a remote movable machine 20 comprising a system 100 for relative positioning of relatively movable machine units 11, 12, 13, 21, 22 for loading according to Fig 3a, wherein the first remote machine unit 21 is articulated in relation to the second remote machine unit 22. According to one embodiment, the articulated position of the first remote machine unit 12 in relation to the second remote machine unit 22 results from a steering of the remote movable machine 20.

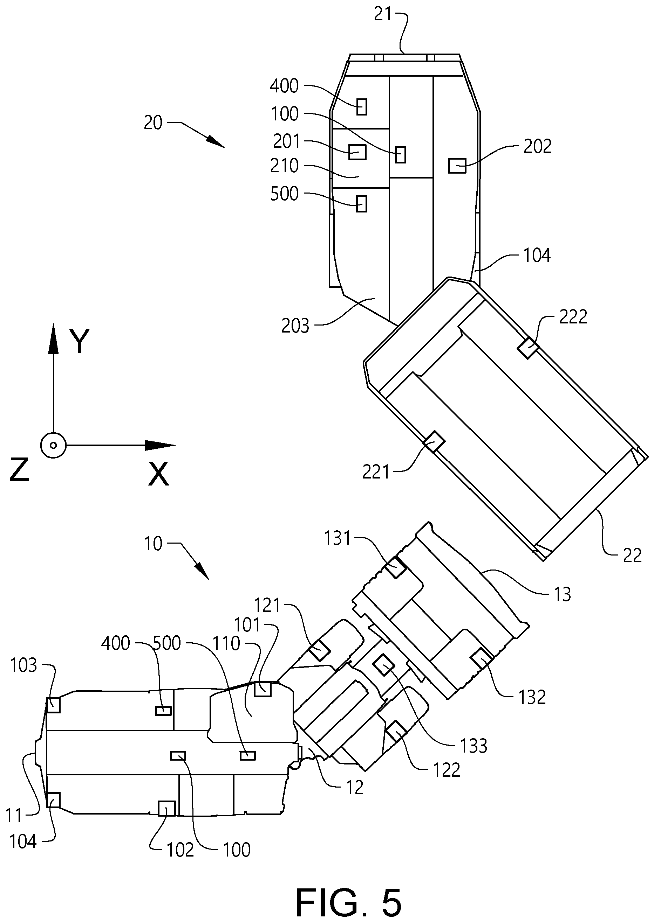

Fig. 5 shows a side view, from above, of a movable machine 10 and a remote movable machine 20 comprising a system 100 for relative positioning of relatively movable machine units 11, 12, 13, 21, 22, respectively. In Fig. 5, the movable machine 10 and remote movable machine 20 are positioned or approaching a position for a load operation, also referred to as loading or unloading. In such positions, as exemplified in Fig. 5, the first remote machine unit 12 may be articulated in relation to the first machine unit 11. Further, in such positions, as exemplified in Fig. 5, the first remote machine unit 21 may be articulated in relation to the second remote machine unit 22. During loading, bucket may further be lifted and relatively articulated in relation to the own machine and machine units as well as the remote machine and machine units including the box. According to one embodiment, an operational relative position comprises a suitable relative position between machine units for loading in an efficient manner. According to one embodiment, such operational relative position comprises specific articulation angles between the machine units. According to one embodiment, an operational relative position comprises specific articulation angles between machine units being directly or indirectly connected. According to one embodiment, an operational relative position comprises specific articulation angles between machine units being separate from each other.

According to one embodiment, as seen in Fig. 5, the system 100 comprises at least a first positioning device 101, a second positioning device 102 and a third positioning device 103, each configured to receive and transmit positioning signals comprising positioning data, arranged at a first, second and third predefined local position on a first machine unit 11 of the movable machine 10, respectively. According to one embodiment, the system 100 further comprises a fourth positioning device 104, configured to receive and transmit positioning signals comprising positioning data, arranged at a fourth predefined local position in the first machine unit 11. According to one embodiment, the first, second and third predefined local positions are positions in a local coordinate system (x, y, z) of the first machine unit 11. According to one embodiment, the local coordinate system (x, y, z) is a Cartesian coordinate system. According to one embodiment, the first, second, third and fourth predefined local positions are positions in a local coordinate system (x, y, z) of the first machine unit 11. According to one embodiment, as seen in Fig 5, the local coordinate system is defined by that the x-direction is parallel with the lengthwise and forward direction of the first machine unit 11. According to one embodiment, the z-direction is parallel with a vertical direction and perpendicular to the x-direction. According to one embodiment, the y-direction is parallel with a lateral direction of the first machine unit 11 and perpendicular to the y-direction. According to one embodiment, the local coordinate system is fixed with respect to the first machine unit 11. Thus, according to one embodiment, the local coordinate system and a position herein, does not provide a global position or a local position on a map in e.g. the mining environment itself. According to one embodiment the predefined positions may be any position on the first machine unit 11. According to one embodiment the first, second and third predefined positions are relatively fixed. According to one embodiment the first, second, third and fourth predefined positions are relatively fixed. According to one embodiment, the predefined positions are located on the first machine unit 11 so as to avoid attenuating or obstruction of the positioning signals. According to one embodiment, the predefined positions are located on the exterior of the first machine unit 11. According to one embodiment, predefined refers to that the position is known or stored in the system. According to one embodiment, each positioning device comprises stored information relating to its predefined local position in the machine unit.

According to one embodiment, a first remote positioning device 121, 201 is arranged at a first remote position relatively movable in relation to the first, second and third predefined local position, on a first remote machine unit 12, 21. According to one embodiment, the first remote positioning device 121, 201 is configured to receive and transmit positioning signals comprising positioning data. According to one embodiment, the first remote positioning device 121, 201 is in a relative position to the first second and third predefined local position respectively. According to one embodiment, the relative positions to the first, second and third predefined local positions, are positions in the local coordinate system (x, y, z) of the first machine unit 11. According to one embodiment, the relative positions to the first, second and third predefined local positions, are positions in the local coordinate system (x, y, z) of the first machine unit 11 at any given point in time.

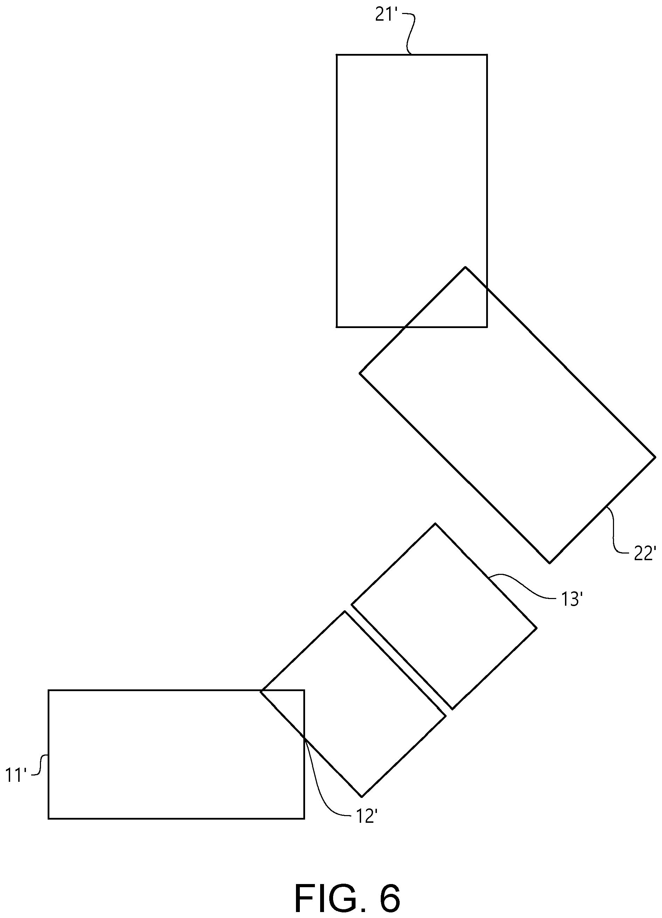

According to one embodiment, the first remote positioning device 121, 201, is configured to store first remote machine unit data comprising data for identification of the first remote machine unit 12, 21 and a predefined local position of the first remote positioning device 121, 201 on the first remote machine unit 12, 21. According to one embodiment, data for identification of a machine unit comprises predefined geometries of the machine unit. According to one embodiment, data for identification of a machine unit comprises vehicle type. According to one embodiment, data for identification of a machine unit comprises identification of the specific vehicle, i.e. Vehicle ID within a machine park or fleet of machines. By such identification, the system 100 may determine that a correct loading will or has been carried out, between two correct vehicle IDs. According to one embodiment, the first remote positioning device 121, 201 is configured to receive and transmit the first remote machine unit data. According to one embodiment, a predefined local position of the first remote positioning device 121, 201, refers to a position within a predefined geometry of the first remote machine unit 12, 21. According to one embodiment, a predefined geometry of the first remote machine unit 12, 21 refers to the exterior boundaries of the first remote machine unit 12, 21. According to one embodiment, a predefined geometry of the first remote machine unit 12, 21 refers to specific exterior boundary points of the first remote machine unit 12, 21. According to one embodiment, a predefined geometry of the first remote machine unit 12, 21 refers to specific exterior boundary points of the first remote machine unit 12, 21 connected with lines approximating the exterior boundary of the first remote machine unit 12, 21. According to one embodiment, a predefined local position of any positioning device, refers to a position within a predefined geometry of the machine unit comprising the predefined local position. According to one embodiment, a predefined geometry 11', 12', 13', 21', 22' of any machine unit refers to specific exterior boundary points of the machine unit connected with lines approximating the exterior boundary of the machine unit as can be further seen in Fig. 6. According to one embodiment the exterior boundary points are points at certain edges of the machine unit.

Fig. 6 shows a mapping of first machine unit data and first remote machine unit data comprising predefined geometries 11', 12', 21', of a first machine unit 11 and a first remote machine unit 12, 21, respectively, in a relative position. That is, the first machine unit data comprising predefined geometries 11', of a first machine unit 11 and the first remote machine unit data comprising predefined geometries 12', 21' of the first remote machine unit 12, 21. According to one embodiment, mapping is the process of representing, or modelling, the first machine unit data and the first remote machine unit data in a local coordinate system (x, y, z). According to one embodiment, mapping or representation comprises carrying out calculations that determines the positions of the specific exterior boundary points approximating the outermost exterior boundary of the machine units in the local coordinate system (x, y, z). According to one embodiment, mapping or representation comprises carrying out calculations that determines positions of the lines connecting the specific exterior boundary points of the machine units. According to one embodiment, mapping or representation comprises storing the calculated positions, e.g. for further calculations. According to one embodiment, such mapping or representation comprises graphically representing the mapping on a display unit. According to one embodiment, the mapping in a relative position is based on the relative position of the first remote positioning device 121, 201 to the first, second and third predefined local position, respectively, and the predefined local position of the first remote positioning device 121, 201 on the first remote machine unit 12, 21. Thus, at least according to some embodiments, it is sufficient with a single first remote positioning device to be able to provide a relative positioning and mapping. For instance, the first remote machine unit may be circular or essentially circular or symmetrical around a center point of the first remote machine unit, and the predefined local position may be arranged in the center point. According to some embodiment, the capacity of the system 100 for identification of the machine units, provides a possibility to determine if the machine is directly or indirectly connected to the first machine unit. According to one embodiment, if the machine unit is determined to be directly or indirectly connected to the first machine unit, the system 100 is able to provide a relative positioning and mapping using single first remote positioning device. According to one embodiment, mapping in a relative position, is further based on the relative position of the second remote positioning device 122, 202 to the first, second and third predefined local position, respectively, and the predefined local position of the second remote positioning device 122, 202 on the first remote machine unit 12, 21. Further, Fig. 6 shows a mapping of a first machine unit data second remote machine unit data comprising predefined geometries 11', 13', 22' of the first machine unit 11 and the second remote machine unit 13, 22, respectively, in a relative position. That is, the first machine unit data comprising predefined geometries 11', of a first machine unit 11 and the second remote machine unit data comprising predefined geometries 13', 22' of the second remote machine unit 13, 22. According to one embodiment, the mapping in a relative position is based on the relative position of the third remote positioning device 131, 221 to the first, second and third predefined local position, respectively, and the predefined local position of the third remote positioning device 131, 221 on the second remote machine unit 13, 22.

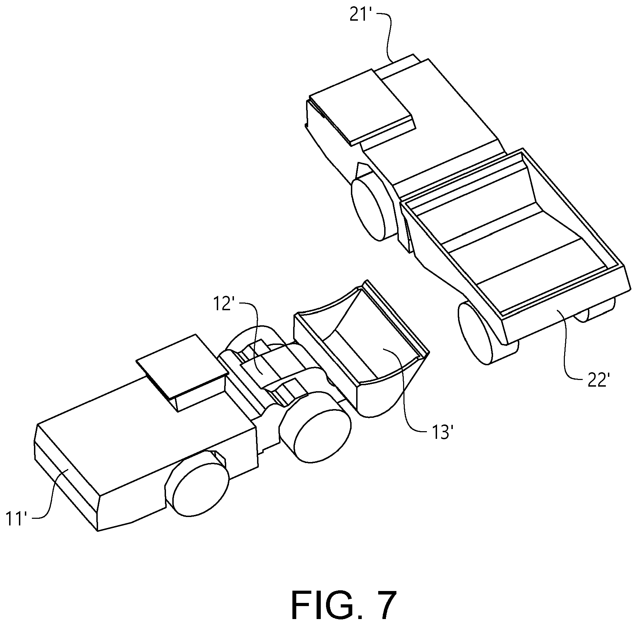

According to one embodiment, the predefined geometries 11", 12", 13", 21", 22" comprise three-dimensional (3D) geometries of the first machine unit 11, and the first 12, 21 and second 13, 22 remote machine unit, respectively. According to one embodiment, the three-dimensional (3D) geometries refers to the exterior boundary of the machine unit. According to one embodiment, the three-dimensional (3D) geometries of any machine unit refer to specific exterior boundary points of the exterior boundary of the machine unit. According to one embodiment, the exterior boundary points are connected with lines approximating the exterior boundary of the machine unit. Fig. 7 shows a mapping of first machine unit data and first remote machine unit data comprising predefined three-dimensional (3D) geometries of the first machine unit 11 and the first remote machine unit 12, 21, respectively. Fig. 7 further shows a mapping of second remote machine unit data comprising three-dimensional (3D) geometries of the second remote machine unit 13, 22. Thus, Fig 7 shows a mapping or representation of a movable machine 10 and a remote movable machine 20. According to one embodiment, using (3D) geometries provides or enhances a capacity to avoid collisions in space between machine units.

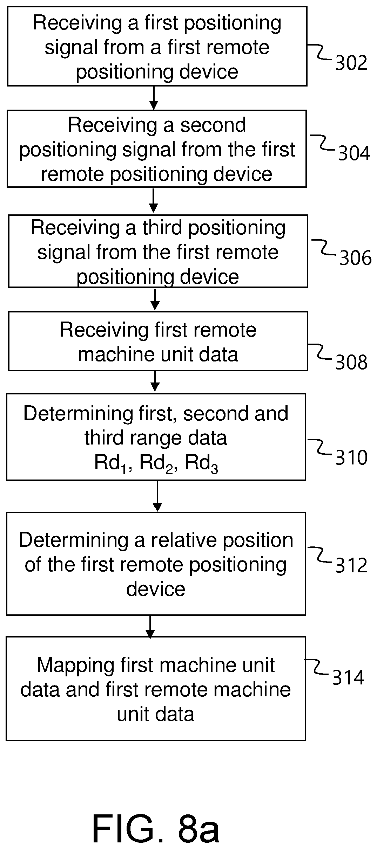

Fig. 8a shows a flow chart schematically showing method steps of an embodiment of a method performed by a system 100 for relative positioning of relatively movable machine units 11, 12, 13, 21, 22 for loading. According to one embodiment, Fig. 8a shows a flow chart schematically showing method steps of an embodiment of a method performed by a system 100 for relative positioning of relatively movable machine units 11, 12, 13, 21, 22 for autonomous loading. A procedure or method in a system 100 for relative positioning of relatively movable machine units 11, 12, 13, 21, 22 will now be described with reference to Fig. 8a. The method comprises receiving 302 via the first positioning device 101 a first positioning signal from a first remote positioning device 121, 201 arranged at a first remote position relatively movable in relation to the first, second and third predefined local position, on a first remote machine unit 12, 21. The method further comprising receiving 304 via the second positioning device 102 a second positioning signal from the first remote positioning device 121, 201. The method further comprising receiving 306 via the third positioning device 103 a third positioning signal from the first remote positioning device 121, 201. The method further comprising receiving 308 first remote machine unit data from the first remote positioning device 121, 201 comprising data for identification of the first remote machine unit 12, 21 and a predefined local position of the first remote positioning device 121, 201 on the first remote machine unit 12, 21. The method further comprising determining 310 first, second and third range data Rd₁, Rd₂, Rd₃, based on the first, second and third positioning signal, respectively. According to one embodiment, the positioning signals comprises information or data enabling the determination of a distance or range to the remote positioning device emitting the positioning signal. According to one embodiment, the positioning signal comprises clock signal data for transmitting the positioning signal. According to one embodiment, the system 100 is configured to provide a synchronization of the clock signals of the positioning devices. According to one embodiment, the first, second and third range data Rd₁, Rd₂, Rd₃ comprises a first, second and third range difference, respectively, between the first remote positioning device 121, 201 and each pair of the first 101, second 102 and third 103 positioning device, respectively, wherein the first, second and third range difference is determined using Time Difference of Arrival (TDoA) calculations. According to one embodiment, the first, second and third range data Rd₁, Rd₂, Rd₃ comprises a range or distance between the first remote positioning device 121, 201 and the first 101, 201, second 102, 202, and third 103, 203 positioning device. Any suitable range calculation algorithm may be employed for computing the range, for example the widely used Time of Flight (ToF) calculations. The method further comprising determining 312 a relative position of the first remote positioning device 121, 201 to the first, second and third predefined local position, respectively, based on the first, second and third range data Rd₁, Rd₂, Rd₃. The method further comprising mapping 314 first machine unit data and first remote machine unit data comprising predefined geometries of the first machine unit 11 and the first remote machine unit 12, 21, respectively, in a relative position, based on the relative position of the first remote positioning device 121, 201 to the first, second and third predefined local position, respectively, and the predefined local position of the first remote positioning device 121, 201 on the first remote machine unit 12, 21. Any suitable positioning algorithm may be employed for computing the position or relative position of the first remote positioning device 121, 201 to the first, second and third predefined positioning device based on the first, second and third range data Rd₁, Rd₂, Rd, for example trilateration or multilateration calculations. According to one embodiment, being received via a positioning device comprises that the positioning device receives a positioning signal from a remote positioning device. According to one embodiment the system 100 is then able to e.g. determine range data between the remote positioning device and the positioning device. According to one embodiment, the range data may be determined by the positioning device or elsewhere among the entities in the system 100.

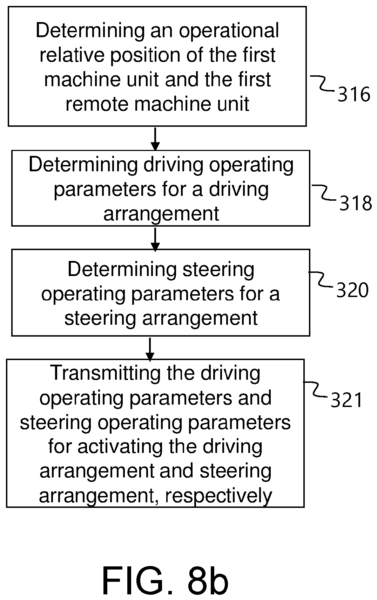

Fig. 8b shows a flow chart schematically showing method steps of an embodiment of a method performed by a system for relative positioning of relatively movable machine units 11, 12, 13, 21, 22 for loading. A procedure or method in a system 100 for relative positioning of relatively movable machine units 11, 12, 13, 21, 22 for loading will now be described with reference to Fig. 8b. According to the embodiment, the method further comprising determining 316 an operational relative position of the first machine unit 11 and the first remote machine unit 12, 21 and/or the second remote machine unit 13, 22. The method further comprising determining 318 driving operating parameters for a driving arrangement 400, for driving the movable machine 10 to the operational relative position. The method further comprising determining 320 steering operating parameters for a steering arrangement 500, for steering the movable machine 10 to the operational relative position. The method further comprising transmitting 321 the driving operating parameters and steering operating parameters to the driving arrangement 400 and steering arrangement 500 respectively, for activating the driving arrangement and steering arrangement, respectively. According to one embodiment, the operational relative position is based on an assignment task of the movable machine 10 requiring interaction with the remote movable machine 20, wherein the driving operating parameters, and steering operating parameters are determined to avoid overlap between the mapped predefined geometries of the first machine unit 11, the first remote machine unit 12, 21 and/or the second remote machine unit 13, 22. According to one embodiment, an overlap is determined when the calculated local position of a specific exterior boundary point of one machine unit is the same as the calculated local position of a specific exterior boundary point of another machine unit .According to one embodiment, an overlap between mapped predefined geometries indicates a collision between the machine units. According to one embodiment, an assignment task is loading. According to one embodiment, an assignment task is a loading operation.

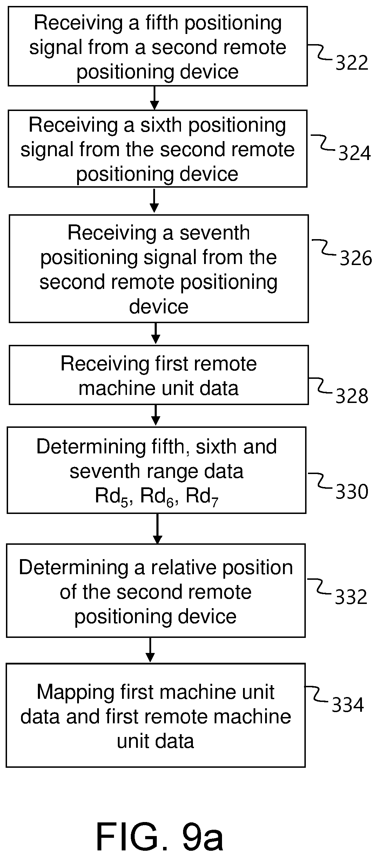

Fig. 9a shows a flow chart schematically showing method steps of an embodiment of a method performed by a system 100 for relative positioning of relatively movable machine units 11, 12, 13, 21, 22 for loading. A procedure or method in a system 100 for relative positioning of relatively movable machine units 11, 12, 13, 21, 22 for loading will now be described with reference to Fig. 9a. According to the embodiment, the method further comprising receiving 322 via the first positioning device 101 a fifth positioning signal from a second remote positioning device 122, 202 arranged at a second remote position relatively movable in relation to the first, second and third predefined local position, on the first remote machine unit 12, 21. The method further comprising receiving 324 via the second positioning device 102 a sixth positioning signal from the second remote positioning device 122, 202. The method further comprising receiving 326 via the third positioning device 103 a seventh positioning signal from the second remote positioning device 122, 202. The method further comprising receiving 328 first remote machine unit data from the second remote positioning device 122, 202 comprising data for identification of the predefined local position of the second remote positioning device 122, 202 in the first remote machine unit 12, 21. The method further comprising determining 330 fifth, sixth and seventh range data Rd₅, Rd₆, Rd₇, based on the fifth, sixth and seventh positioning signal, respectively. The method further comprising determining 332 a relative position of the second remote positioning device 122, 202 to the first, second and third predefined local position, respectively, based on the fifth, sixth and seventh range data Rd₅, Rd₆, Rd₇. The method further comprising mapping 334 first machine unit data and first remote machine unit data comprising predefined geometries of the first machine unit 11 and the first remote machine unit 12, 21, respectively, in a relative position, further based on the relative position of the second remote positioning device 122, 202 to the first, second and third predefined local position, respectively, and the predefined local position of the second remote positioning device 122, 202 on the first remote machine unit 12, 21.

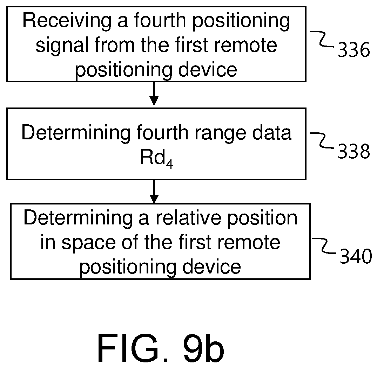

Fig. 9b shows a flow chart schematically showing method steps of an embodiment of a method performed by a system 100 for relative positioning of relatively movable machine units 11, 12, 13, 21, 22 for loading. A procedure or method in a system 100 for relative positioning of relatively movable machine units 11, 12, 13, 21, 22 for loading will now be described with reference to Fig. 9b. According to the embodiment, the method of Fig. 8a, further comprising receiving 336 via the fourth positioning device 104 a fourth positioning signal from the first remote positioning device 121, 201. The method further comprising determining 338 fourth range data Rd₄, based on the fourth positioning signal. The method further comprising determining 340 a relative position in space of the first remote positioning device 121, 201 to the first, second, third and fourth predefined local position, respectively, based on the first, second third and fourth range data Rd₁, Rd₂, Rd₃, Rd₄. The method further comprising mapping 314 first machine unit data and first remote machine unit data comprising predefined three-dimensional (3D) geometries of the first machine unit 11 and the first remote machine unit 12, 21, respectively, based on the relative position in space of the first remote positioning device 101 to the first, second, third and fourth predefined local position, respectively, and the local predefined position of the first remote positioning device 121, 201 in the remote machine unit 12, 22. According to one embodiment, the use of a fourth positioning device 104 provides a higher accuracy in determining the spatial position of the remote positioning devices. According to one embodiment, a fourth positioning device enables the relative positioning in space of a remote positioning device.

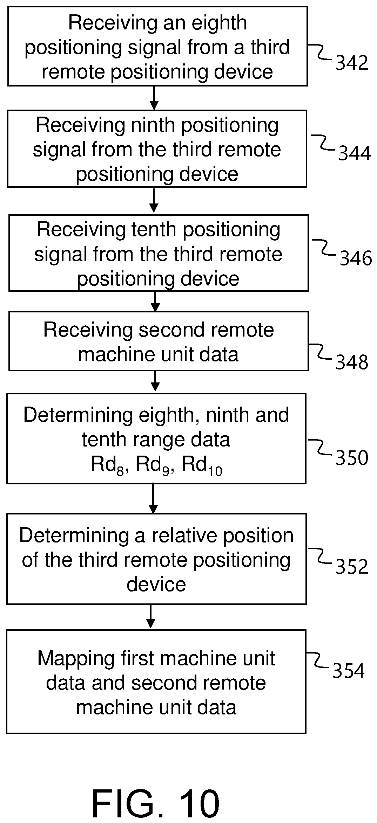

Fig. 10 shows a flow chart schematically showing method steps of an embodiment of a method performed by a system 100 for relative positioning of relatively movable machine units 11, 12, 13, 21, 22 for loading. A procedure or method in a system 100 for relative positioning of relatively movable machine units 11, 12, 13, 21, 22 for loading will now be described with reference to Fig. 10. According to the embodiment, the method of Fig. 9a, further comprising receiving 342 via the first positioning device 101 an eighth positioning signal from a third remote positioning device 131, 221 arranged at a third remote position relatively movable in relation to the first, second and third predefined local position, on a second remote machine unit 13, 22. The method further comprising receiving 344 via the second positioning device 102 a ninth positioning signal from the third remote positioning device 131, 221. The method further comprising receiving 346 via the third positioning device 103 a tenth positioning signal from the third remote positioning device 131, 221. The method further comprising receiving 348 second remote machine unit data from the third remote positioning device 131, 221 comprising data for identification of the second remote machine unit 13, 22 and a predefined local position of the third remote positioning device 131, 221 on the second remote machine unit 13, 22. The method further comprising determining 350 eighth, ninth and tenth range data Rd₈, Rd₉, Rd₁₀, based on the eighth, ninth and tenth positioning signal, respectively. The method further comprising determining 352 a relative position of the third remote positioning device 131, 221 to the first, second and third predefined local position, respectively, based on the eighth, ninth and tenth range data Rd₈, Rd₉, Rd₁₀. The method further comprising mapping 354 first machine unit data and second remote machine unit data comprising predefined geometries of the first machine unit 11 and the second remote machine unit 13, 22, respectively, in a relative position, based on the relative position of the third remote positioning device 131, 221 to the first, second and third predefined local position, respectively, and the predefined local position of the third remote positioning device 131, 221 on the second remote machine unit 13, 22. According to one embodiment, the first remote machine unit data and/or second remote machine unit data comprising predefined geometries of the first remote machine unit 12, 21 and second remote machine unit 13, 22, respectively, is stored locally in the first machine unit 11. According to one embodiment the system 100 comprises a fourth remote positioning device 132 arranged on the second remote machine unit 13. According to one embodiment the system 100 comprises any number of remote positioning devices, wherein the system 100 is configured to determine their relative positions in an analogous manner as being described throughout this description.

According to one embodiment, the same method performed by a system 100 for relative positioning of relatively movable machine units 11, 12, 13, 21, 22 for loading described throughout this description is a method performed by a system 100 for relative positioning of relatively movable machine units 11, 12, 13, 21, 22 for autonomous loading.

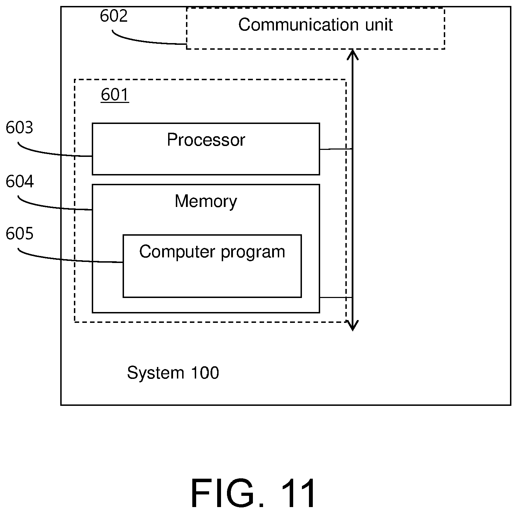

Fig. 11 shows a block schematic of a system 100 according to an embodiment. Fig. 11, in conjunction with Fig. 1, shows a system 100 for relative positioning of relatively movable machine units 11, 12, 13, 21, 22 for loading. The system 100 comprises processing circuitry 603 and a memory 604. The processing circuitry 603 may comprise one or more programmable processor, application-specific integrated circuits, field programmable gate arrays or combinations of these (not shown) adapted to execute instructions. The memory contains instructions executable by said processing circuitry, whereby the system 100 is operative for receiving 302 via the first positioning device 101 a first positioning signal from a first remote positioning device 121, 201 arranged at a first remote position relatively movable in relation to the first, second and third predefined local position, on a first remote machine unit 12, 21. The system 100 is further operative for receiving 304 via the second positioning device 102 a second positioning signal from the first remote positioning device 121, 201. The system 100 is further operative for receiving 306 via the third positioning device 103 a third positioning signal from the first remote positioning device 121, 201. The system 100 is further operative for receiving 308 first remote machine unit data from the first remote positioning device 121, 201 comprising data for identification of the first remote machine unit 12, 21 and a predefined local position of the first remote positioning device 121, 201 on the first remote machine unit 12, 21. The system 100 is further operative for determining 310 first, second and third range data Rd₁, Rd₂, Rd₃, based on the first, second and third positioning signal, respectively. The system 100 is further operative for determining 312 a relative position of the first remote positioning device 121, 201 to the first, second and third predefined local position, respectively, based on the first, second and third range data Rd₁, Rd₂, Rd₃. The system 100 is further operative for mapping 314 first machine unit data and first remote machine unit data comprising predefined geometries of the first machine unit 11 and the first remote machine unit 12, 21, respectively, in a relative position, based on the relative position of the first remote positioning device 121, 201 to the first, second and third predefined local position, respectively, and the predefined local position of the first remote positioning device 121, 201 on the first remote machine unit 12, 21.

According to one embodiment, the system 100 is further operative for determining 316 an operational relative position of the first machine unit 11 and the first remote machine unit 12, 21 and/or the second remote machine unit 13, 22. According to one embodiment, the system 100 is further operative for determining 318 driving operating parameters for a driving arrangement 400, for driving the movable machine 10 to the operational relative position. According to one embodiment, the system 100 is further operative for determining 320 steering operating parameters for a steering arrangement 500, for steering the movable machine 10 to the operational relative position. According to one embodiment, the system 100 is further operative for transmitting 321 the driving operating parameters and steering operating parameters to the driving arrangement 400 and steering arrangement 500 respectively, for activating the driving arrangement and steering arrangement, respectively.

According to one embodiment, the system 100 is further operative for receiving 322 via the first positioning device 101 a fifth positioning signal from a second remote positioning device 122, 202 arranged at a second remote position relatively movable in relation to the first, second and third predefined local position, on the first remote machine unit 12, 21. According to one embodiment, the system 100 is further operative for receiving 324 via the second positioning device 102 a sixth positioning signal from the second remote positioning device 122, 202. According to one embodiment, the system 100 is further operative for receiving 326 via the third positioning device 103 a seventh positioning signal from the second remote positioning device 122, 202, According to one embodiment, the system 100 is further operative for receiving 328 first remote machine unit data from the second remote positioning device 122, 202 comprising data for identification of the predefined local position of the second remote positioning device 122, 202 in the first remote machine unit 12, 21. According to one embodiment, the system 100 is further operative for determining 330 fifth, sixth and seventh range data Rd₅, Rd₆, Rd₇, based on the fifth, sixth and seventh positioning signal, respectively. According to one embodiment, the system 100 is further operative for determining 332 a relative position of the second remote positioning device 122, 202 to the first, second and third predefined local position, respectively, based on the fifth, sixth and seventh range data Rd₅, Rd₆, Rd₇. According to one embodiment, the system 100 is further operative for mapping 334 first machine unit data and first remote machine unit data comprising predefined geometries of the first machine unit 11 and the first remote machine unit 12, 21, respectively, in a relative position, further based on the relative position of the second remote positioning device 122, 202 to the first, second and third predefined local position, respectively, and the predefined local position of the second remote positioning device 122, 202 on the first remote machine unit 12, 21.

According to one embodiment, the system 100 further comprises a fourth positioning device 104, configured to receive and transmit positioning signals comprising positioning data, arranged at a fourth predefined local position in the first machine unit 11, wherein the system 100 is further operative for: receiving 336 via the fourth positioning device 104 a fourth positioning signal from the first remote positioning device 121, 201. According to one embodiment, the system 100 is further operative for determining 338 fourth range data Rd₄, based on the fourth positioning signal. According to one embodiment, the system 100 is further operative for, determining 340 a relative position in space of the first remote positioning device 121, 201 to the first, second, third and fourth predefined local position, respectively, based on the first, second third and fourth range data Rd₁, Rd₂, Rd₃, Rd₄. According to one embodiment, the system 100 is further operative for mapping 316 first machine unit data and remote machine unit data comprising predefined three-dimensional (3D) geometries of the first machine unit 11 and the first remote machine unit 12, 21, respectively, based on the relative position in space of the first remote positioning device 101 to the first, second, third and fourth predefined local position, respectively, and the local predefined position of the first remote positioning device 121, 201 in the remote machine unit 12, 22.

According to one embodiment, the system 100 is further operative for receiving 342 via the first positioning device 101 an eighth positioning signal from a third remote positioning device 131, 221 arranged at a third remote position relatively movable in relation to the first, second and third predefined local position, on a second remote machine unit 13, 22. According to one embodiment, the system 100 is further operative for receiving 344 via the second positioning device 102 a ninth positioning signal from the third remote positioning device 131, 221. According to one embodiment, the system 100 is further operative for receiving 346 via the third positioning device 103 a tenth positioning signal from the third remote positioning device 131, 221. According to one embodiment, the system 100 is further operative for receiving 348 second remote machine unit data from the third remote positioning device 131, 221 comprising data for identification of the second remote machine unit 13, 22 and a predefined local position of the third remote positioning device 131, 221 on the second remote machine unit 13, 22. According to one embodiment, the system 100 is further operative for determining 350 eighth, ninth and tenth range data Rd₈, Rd₉, Rd₁₀, based on the eighth, ninth and tenth positioning signal, respectively. According to one embodiment, the system 100 is further operative for determining 352 a relative position of the third remote positioning device 131, 221 to the first, second and third predefined local position, respectively, based on the eighth, ninth and tenth range data Rd₈, Rd₉, Rd₁₀. According to one embodiment, the system 100 is further operative for mapping 354 first machine unit data and second remote machine unit data comprising predefined geometries of the first machine unit 11 and the second remote machine unit 13, 22, respectively, in a relative position, based on the relative position of the third remote positioning device 131, 221 to the first, second and third predefined local position, respectively, and the predefined local position of the third remote positioning device 131, 221 on the second remote machine unit 13, 22.

According to one embodiment, the system 100 of the remote machine 20 functions in an analogous manner to what has been described throughout this description for the system 100 of the machine 10. According to one embodiment, remote machine 20 forms the machine 10 and vice versa, wherein the system 100 of the remote machine functions in an analogous manner to what has been described throughout this description for the system 100 of the machine 10.

According to one embodiment, any or all of the first 101, second 102, and third 103 positioning device, and first 121, 201, second 122, 202 and third 131, 221 remote positioning device is a Radio Frequency (RF) signal transceiver.

According to one embodiment, any or all of the first 101, second 102, and third 103 positioning device, and first 121, 201, second 122, 202 and third 131, 221 remote positioning device is a ranging device.

According to one embodiment, the Radio Frequency (RF) signal transceiver is an Ultra-Wideband (UWB) signal transceiver.

According to one embodiment, the Radio Frequency (RF) signal transceiver is an Ultra-Wideband (UWB) module. According to one embodiment the UWB module is an integrated ultra-wideband transceiver integrated circuit (IC). According to one embodiment the UWB module is compliant to IEEE802. According to one embodiment, the UWB module supports radio frequency (RF) bands from 3.1 to 10,6 GHz. According to one embodiment, The UWB module/transceiver can be used in the real-time localization systems (RTLS) as a tag or anchor module. According to one embodiment, the positioning devices comprises at least one antenna. According to one embodiment an antenna is integrated into the UWB module.

According to one embodiment, the first 101, second 102, and third 103 positioning device, and first 121, 201 and second 122, 202 remote positioning device is a mobile tag.

According to one embodiment, the first, second, and third positioning device, and first and second remote positioning device is a radio tag.

According to one embodiment, the first to tenth range data Rd₁, Rd₂, Rd₃, Rd₄, Rd₅, Rd₆, Rd₇, Rd₈, Rd₉, Rd₁₀ each comprises a range between the first remote positioning device 121, 201, the second remote positioning device 122, 202 or the third remote positioning device 131, 221 and the first 101, 201, second 102, 202 and third 103, 203 positioning device, respectively, wherein any of the first to tenth range Rd₁, Rd₂, Rd₃, Rd₄, Rd₅, Rd₆, Rd₇, Rd₈, Rd₉ Rd₁₀ is determined using Time of Flight (ToF) calculations.

According to some embodiments, determining 312, 332, 340, 352 a relative position of the first remote positioning device 121, 201, and/or the second remote positioning device 122, 202 and/or the third remote positioning device 131, 221 to the first, second and third predefined local position, respectively, is carried out using trilateration or multilateration calculations.

According to some embodiments, the system 100 is configured to work and function together with positioning systems such as scanners such as LIDARs or RADARs for positioning of e.g. certain machine units, or real time positioning systems using fixedly arranged positioning infrastructure, under certain conditions. Such conditions may e.g. be availability of other positioning infrastructure, certain assignment tasks, available battery power etc. According to one embodiment, the system 100 is configured to select between different positioning systems including the system 100 based on actual conditions. According to one embodiment, system 100 is configured to be initiated based on accessing areas in certain areas of a map or where there is no accessible positioning infrastructure in the mining environment.

In some embodiments, the feature(s) of the system 100, e.g. the processing circuitry and the memory, which perform the method steps may be a group of network nodes, wherein functionality for performing the method are spread out over different physical, or virtual, nodes of the network. In other words, the feature(s) of the system 100 which perform the method steps may be a cloud-solution, i.e. the feature(s) of the system 100 which perform the method steps may be deployed as cloud computing resources that may be distributed in the network. According to one embodiment the different nodes of the network comprises entities within one or several systems 100 in radio frequency communication. According to one embodiment, the processing circuitry and memory which perform the method steps may one or several of the positioning devices. According to one embodiment, the positioning devices are integrated circuits.

According to other embodiments, the system 100 may further comprise a communication unit 602, which may be considered to comprise conventional means for communicating with relevant entities, such as other computers or devices to which it is operatively connected. Such entities may comprise other similar systems 100. In an embodiment the communication unit 602 may comprise chip set adopted for communication via CAN bus (Controller Area Network) or communication adopted to ISO 11898. Other examples of standards which may be supported by the communication interface 265are: ZigBee, Bluetooth, RFID (Radio frequency identification), USB (Universal serial bus), or IEEE 802.11(Institute of Electrical and Electronics Engineers), including but not limited to 802.11a/b/n or other similar forthcoming standards. The communication unit 602 may comprise an antenna. The communication unit 602 may be connectable to an external antenna. The instructions executable by said processing circuitry 603 may be arranged as a computer program 605 stored e.g. in the memory 604. The processing circuitry 603 and the memory 604 may be arranged in a sub-arrangement 601. The sub-arrangement 601 may be a micro-processor and adequate software and storage therefore, a Programmable Logic Device, PLD, or other electronic component(s)/processing circuit(s) configured to perform the methods mentioned above. According to one embodiment, the processing circuitry 603 may comprise a single Central Processing Unit (CPU), or could comprise two or more processing units. For example, the processing circuitry 603 may include general purpose microprocessors, instruction set processors and/or related chips sets and/or special purpose microprocessors such as Application Specific Integrated Circuits (ASICs). The processing circuitry 603 250 may also comprise a storage for caching purposes. According to some embodiments, the system 100 comprises further functionality useful for the system 100 to serve its purpose, such as power supply, internal communications bus, internal cooling, database engine, operating system, not limiting to other functionalities.

The computer program 605 may comprise computer readable code means, which when run in a system 100 causes the system 100 to perform the steps described in any of the described embodiments of the system 100. The computer program 605 may be carried by a computer program product connectable to the processing circuitry 603. The computer program product may be the memory 604. The memory 604 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory 604. Alternatively, the computer program may be stored on a server or any other entity connected to the system 100, to which the system 100 has access via the communication unit 602. The computer program may then be downloaded from the server into the memory 604.

Although the description above contains a plurality of specificities, these should not be construed as limiting the scope of the concept described herein but as merely providing illustrations of some exemplifying embodiments of the described concept. The scope of the invention is defined by the appended claims.

## Claims

1. A method performed by a system (100) for relative positioning of relatively movable machine units (11, 12, 13, 21, 22) for loading, comprising at least a first positioning device (101), a second positioning device (102) and a third positioning device (103), each configured to receive and transmit positioning signals comprising positioning data, arranged at a first, second and third predefined local position on a first machine unit (11) of a movable machine (10), respectively, the method comprising:
receiving (302) via the first positioning device (101) a first positioning signal from a first remote positioning device (121, 201) arranged at a first remote position relatively movable in relation to the first, second and third predefined local position, on a first remote machine unit (12, 21),
receiving (304) via the second positioning device (102) a second positioning signal from the first remote positioning device (121, 201),
receiving (306) via the third positioning device (103) a third positioning signal from the first remote positioning device (121, 201),
receiving (308) first remote machine unit data from the first remote positioning device (121, 201) comprising data for identification of the first remote machine unit (12, 21) and a predefined local position of the first remote positioning device (121, 201) on the first remote machine unit (12, 21),
determining (310) first, second and third range data (Rd₁, Rd₂, Rd₃), based on the first, second and third positioning signal, respectively,
determining (312) a relative position of the first remote positioning device (121, 201) to the first, second and third predefined local position, respectively, based on the first, second and third range data (Rd₁, Rd₂, Rd₃),
mapping (314) first machine unit data and first remote machine unit data comprising predefined geometries (11', 12', 21') of the first machine unit (11) and the first remote machine unit (12, 21), respectively, in a relative position, based on the relative position of the first remote positioning device (121, 201) to the first, second and third predefined local position, respectively, and the predefined local position of the first remote positioning device (121, 201) on the first remote machine unit (12, 21).

2. The method according to claim 1, the method further comprising:
receiving (322) via the first positioning device (101) a fifth positioning signal from a second remote positioning device (122, 202) arranged at a second remote position relatively movable in relation to the first, second and third predefined local position, on the first remote machine unit (12, 21),
receiving (324) via the second positioning device (102) a sixth positioning signal from the second remote positioning device (122, 202),
receiving (326) via the third positioning device (103) a seventh positioning signal from the second remote positioning device (122, 202),
receiving (328) first remote machine unit data from the second remote positioning device (122, 202) comprising data for identification of the predefined local position of the second remote positioning device (122, 202) in the first remote machine unit (12, 21),
determining (330) fifth, sixth and seventh range data (Rd₅, Rd₆, Rd₇), based on the fifth, sixth and seventh positioning signal, respectively,
determining (332) a relative position of the second remote positioning device (122, 202) to the first, second and third predefined local position, respectively, based on the fifth, sixth and seventh range data (Rd₅, Rd₆, Rd₇),
mapping (334) first machine unit data and first remote machine unit data comprising predefined geometries (11', 12', 21') of the first machine unit (11) and the first remote machine unit (12, 21), respectively, in a relative position, further based on the relative position of the second remote positioning device (122, 202) to the first, second and third predefined local position, respectively, and the predefined local position of the second remote positioning device (122, 202) on the first remote machine unit (12, 21).

3. The method according to any of the preceding claims, wherein the first remote machine unit (12) is directly or indirectly connected to the first machine unit (11), and the first machine unit (11) and the first remote machine unit (12) are comprised in the movable machine (10).

4. The method according to any one of the preceding claims, wherein the first remote machine unit (21) is comprised in a remote movable machine (20), separate from the movable machine (10).

5. The method according to any of the preceding claims, the method further comprising:
receiving (342) via the first positioning device (101) an eighth positioning signal from a third remote positioning device (131, 221) arranged at a third remote position relatively movable in relation to the first, second and third predefined local position, on a second remote machine unit (13, 22),
receiving (344) via the second positioning device (102) a ninth positioning signal from the third remote positioning device (131, 221),
receiving (346) via the third positioning device (103) a tenth positioning signal from the third remote positioning device (131, 221),
receiving (348) second remote machine unit data from the third remote positioning device (131, 221) comprising data for identification of the second remote machine unit (13, 22) and a predefined local position of the third remote positioning device (131, 221) on the second remote machine unit (13, 22),
determining (350) eighth, ninth and tenth range data (Rd₈, Rd₉, Rd₁₀), based on the eighth, ninth and tenth positioning signal, respectively,
determining (352) a relative position of the third remote positioning device (131, 221) to the first, second and third predefined local position, respectively, based on the eighth, ninth and tenth range data (Rd₈, Rd₉, Rd₁₀),
mapping (354) first machine unit data and second remote machine unit data comprising predefined geometries (11', 13', 22') of the first machine unit (11) and the second remote machine unit (13, 22), respectively, in a relative position, based on the relative position of the third remote positioning device (131, 221) to the first, second and third predefined local position, respectively, and the predefined local position of the third remote positioning device (131, 221) on the second remote machine unit (13, 22).

6. The method according to claim 5, wherein the second remote machine unit (13, 22) is directly or indirectly connected to the first machine unit (11), and the second remote machine unit (13, 22) is comprised in the movable machine (10).

7. The method according to any one of the preceding claims 5-6, wherein the second remote machine unit (13, 22) is comprised in a remote movable machine (20), separate from the movable machine (10).

8. The method according to any of the preceding claims 5-7, the method further comprising:
determining (316) an operational relative position of the first machine unit (11) and the first remote machine unit (12, 21) and/or the second remote machine unit (13, 22),
determining (318) driving operating parameters for a driving arrangement (400), for driving the movable machine (10) to the operational relative position,
determining (320) steering operating parameters for a steering arrangement (500), for steering the movable machine (10) to the operational relative position,
transmitting (321) the driving operating parameters and steering operating parameters to the driving arrangement and steering arrangement respectively, for activating the driving arrangement and steering arrangement, respectively.

9. The method according to claim 8, wherein the operational relative position is based on an assignment task of the movable machine (10) requiring interaction with the remote movable machine (20), wherein the driving operating parameters, and steering operating parameters are determined to avoid overlap between the mapped predefined geometries of the first machine unit (11), the first remote machine unit (12, 21) and/or the second remote machine unit (13, 22).

10. The method according to any one of the preceding claims 5-9, wherein any or all of the first (101), second (102), and third (103) positioning device, and first (121, 201), second (122, 202) and third (131, 221) remote positioning device is a Radio Frequency (RF) signal transceiver.

11. A system (100) for relative positioning of relatively movable machine units (11, 12, 13, 21, 22) for loading, comprising at least a first positioning device (101), a second positioning device (102) and a third positioning device (103), each configured to receive and transmit positioning signals comprising positioning data, arranged at a first, second and third predefined local position on a first machine unit (11) of a movable machine (10), respectively, the system (100) comprising:
processing circuitry (603); and
a memory (604), said memory (604) containing instructions executable by said processing circuitry (603), whereby said system (100) is operative for:
receiving (302) via the first positioning device (101) a first positioning signal from a first remote positioning device (121, 201) arranged at a first remote position relatively movable in relation to the first, second and third predefined local position, on a first remote machine unit (12, 21),
receiving (304) via the second positioning device (102) a second positioning signal from the first remote positioning device (121, 201),
receiving (306) via the third positioning device (103) a third positioning signal from the first remote positioning device (121, 201),
receiving (308) first remote machine unit data from the first remote positioning device (121, 201) comprising data for identification of the first remote machine unit (12, 21) and a predefined local position of the first remote positioning device (121, 201) on the first remote machine unit (12, 21),
determining (310) first, second and third range data (Rd₁, Rd₂, Rd₃), based on the first, second and third positioning signal, respectively,
determining (312) a relative position of the first remote positioning device (121, 201) to the first, second and third predefined local position, respectively, based on the first, second and third range data (Rd₁, Rd₂, Rd₃),
mapping (314) first machine unit data and first remote machine unit data comprising predefined geometries (11', 12', 21') of the first machine unit (11) and the first remote machine unit (12, 21), respectively, in a relative position, based on the relative position of the first remote positioning device (121, 201) to the first, second and third predefined local position, respectively, and the predefined local position of the first remote positioning device (121, 201) on the first remote machine unit (12, 21).

12. The system (100) according to claim 16, further operative for performing the method according to any of the preceding claims 2-10.

13. A computer program (605) comprising computer readable code means to be run in a system (100) for relative positioning of relatively movable machine units (11, 12, 13, 21, 22) for loading, which computer readable code means when run in the system (100) causes the system (100) to carry out the method according to any of the preceding claims 1-10:

14. A carrier containing the computer program (605) according to claim 13, wherein the carrier is a computer readable storage medium.

15. A movable machine (10, 20) comprising a system (100) for relative positioning of a relatively movable machine units (11, 12, 13, 21, 22) for loading according to any of the preceding claims 11-12.

## Patentansprüche

1. Verfahren, das von einem System (100) zum relativen Positionieren relativ beweglicher Maschineneinheiten (11, 12, 13, 21, 22) zum Laden durchgeführt wird, umfassend mindestens eine erste Positionierungsvorrichtung (101), eine zweite Positionierungsvorrichtung (102) und eine dritte Positionierungsvorrichtung (103), die jeweils zum Empfangen und Übertragen von Positionierungsdaten, die Positionierungssignale umfassen, konfiguriert sind, und an einer ersten, zweiten bzw. dritten vordefinierten lokalen Position auf einer ersten Maschineneinheit (11) einer beweglichen Maschine (10) angeordnet sind, wobei das Verfahren umfasst:
Empfangen (302) eines ersten Positionierungssignals über die erste Positionierungsvorrichtung (101) von einer ersten entfernten Positionierungsvorrichtung (121, 201), die an einer ersten entfernten Position angeordnet ist, die relativ zu der ersten, zweiten und dritten vordefinierten lokalen Position auf einer ersten entfernten Maschineneinheit (12, 21) beweglich ist,
Empfangen (304) eines zweiten Positionierungssignals von der ersten entfernten Positionierungsvorrichtung (121, 201) über die zweite Positionierungsvorrichtung (102), Empfangen (306) eines dritten Positionierungssignals von der ersten entfernten Positionierungsvorrichtung (121, 201) über die dritte Positionierungsvorrichtung (103),
Empfangen (308) von Daten der ersten entfernten Maschineneinheit von der ersten entfernten Positionierungsvorrichtung (121, 201), die Daten zur Identifizierung der ersten entfernten Maschineneinheit (12, 21) und eine vordefinierte lokale Position der ersten entfernten Positionierungsvorrichtung (121, 201) auf der ersten entfernten Maschineneinheit (12, 21) umfassen,
Bestimmen (310) erster, zweiter und dritter Bereichsdaten (Rd₁, Rd₂, Rd₃), basierend auf dem ersten, zweiten bzw. dritten Positionierungssignal,
Bestimmen (312) einer relativen Position der ersten entfernten Positionierungsvorrichtung (121, 201) zur ersten, zweiten bzw. dritten vordefinierten lokalen Position, basierend auf den ersten, zweiten und dritten Bereichsdaten (Rd₁, Rd₂, Rd₃),
Abbilden (314) von Daten der ersten Maschineneinheit und Daten der ersten entfernten Maschineneinheit, die vordefinierte Geometrien (11', 12', 21') der ersten Maschineneinheit (11) bzw. der ersten entfernten Maschineneinheit (12, 21) umfassen, in einer relativen Position, basierend auf der relativen Position der ersten entfernten Positionierungsvorrichtungs (121, 201) zur ersten, zweiten bzw. dritten vordefinierten lokalen Position, und der vordefinierten lokalen Position der ersten entfernten Positionierungsvorrichtung (121, 201) auf der ersten entfernten Maschineneinheit (12, 21).

2. Verfahren nach Anspruch 1, wobei das Verfahren weiter umfasst:
Empfangen (322) eines fünften Positionierungssignals über die erste Positionierungsvorrichtung (101) von einer zweiten entfernten Positionierungsvorrichtung (122, 202), die an einer zweiten entfernten Position angeordnet ist, die relativ zu der ersten, zweiten und dritten vordefinierten lokalen Position auf der ersten entfernten Maschineneinheit (12, 21) beweglich ist,
Empfangen (324) über die zweite Positionierungsvorrichtung (102) eines sechsten Positionierungssignals von der zweiten entfernten Positionierungsvorrichtung (122, 202),
Empfangen (326) über die dritte Positionierungsvorrichtung (103) eines siebten Positionierungssignals von der zweiten entfernten Positionierungsvorrichtung (122, 202),
Empfangen (328) von Daten der ersten entfernten Maschineneinheit von der zweiten entfernten Positionierungsvorrichtung (122, 202), die Daten zur Identifizierung der vordefinierten lokalen Position der zweiten entfernten Positionierungsvorrichtung (122, 202) in der ersten entfernten Maschineneinheit (12, 21) umfassen,
Bestimmen (330) von fünften, sechsten und siebten Bereichsdaten (Rd₅, Rd₆, Rd₇), basierend auf dem fünften, sechsten bzw. siebten Positionierungssignal,
Bestimmen (332) einer relativen Position der zweiten entfernten Positionierungsvorrichtung (122, 202) zur ersten, zweiten bzw. dritten vordefinierten lokalen Position, basierend auf den fünften, sechsten und siebten Bereichsdaten (Rd₅, Rd₆, Rd₇),
Abbilden (334) von Daten der ersten Maschineneinheit und Daten der ersten entfernten Maschineneinheit, die vordefinierte Geometrien (11', 12', 21') der ersten Maschineneinheit (11) bzw. der ersten entfernten Maschineneinheit (12, 21) in einer relativen Position umfassen, weiter basierend auf der relativen Position der zweiten entfernten Positionierungsvorrichtung (122, 202) zur ersten, zweiten bzw. dritten vordefinierten lokalen Position, und der vordefinierten lokalen Position der zweiten entfernten Positionierungsvorrichtung (122, 202) auf der ersten entfernten Maschineneinheit (12, 21).

3. Verfahren nach einem der vorstehenden Ansprüche, wobei die erste entfernte Maschineneinheit (12) direkt oder indirekt mit der ersten Maschineneinheit (11) verbunden ist, und die erste Maschineneinheit (11) und die erste entfernte Maschineneinheit (12) in der beweglichen Maschine (10) umfasst sind.

4. Verfahren nach einem der vorstehenden Ansprüche, wobei die erste entfernte Maschineneinheit (21) in einer entfernten beweglichen Maschine (20) umfasst ist, die von der beweglichen Maschine (10) getrennt ist.

5. Verfahren nach einem der vorstehenden Ansprüche, wobei das Verfahren weiter umfasst:
Empfangen (342) eines achten Positionierungssignals über die erste Positionierungsvorrichtung (101) von einer dritten entfernten Positionierungsvorrichtung (131, 221), die an einer dritten entfernten Position angeordnet ist, die relativ in Bezug auf die erste, zweite und dritte vordefinierte lokale Position auf einer zweiten entfernten Maschineneinheit (13, 22) beweglich ist,
Empfangen (344) eines neunten Positionierungssignals über die zweite Positionierungsvorrichtung (102) von der dritten entfernten Positionierungsvorrichtung (131, 221),
Empfangen (346) über die dritte Positionierungsvorrichtung (103) eines zehnten Positionierungssignals von der dritten entfernten Positionierungsvorrichtung (131, 221),
Empfangen (348) von Daten der zweiten entfernten Maschineneinheit von der dritten entfernten Positionierungsvorrichtung (131, 221), die Daten zur Identifizierung der zweiten entfernten Maschineneinheit (13, 22) und eine vordefinierte lokale Position der dritten entfernten Positionierungsvorrichtung (131, 221) auf der zweiten entfernten Maschineneinheit (13, 22) umfassen,
Bestimmen (350) von achten, neunten und zehnten Bereichsdaten (Rd₈, Rd₉, Rd₁₀), basierend auf dem achten, neunten bzw. zehnten Positionierungssignal,
Bestimmen (352) einer relativen Position der dritten entfernten Positionierungsvorrichtung (131, 221) zur ersten, zweiten bzw. dritten vordefinierten lokalen Position, basierend auf den achten, neunten und zehnten Bereichsdaten (Rd₈, Rd₉, Rd₁₀),
Abbilden (354) von Daten der ersten Maschineneinheit und Daten der zweiten entfernten Maschineneinheit, die vordefinierte Geometrien (11', 13', 22') der ersten Maschineneinheit (11) bzw. der zweiten entfernten Maschineneinheit (13, 22) umfassen, in einer relativen Position, basierend auf der relativen Position der dritten entfernten Positionierungsvorrichtung (131, 221) zur ersten, zweiten bzw. dritten vordefinierten lokalen Position, und der vordefinierten lokalen Position der dritten entfernten Positionierungsvorrichtung (131, 221) auf der zweiten entfernten Maschineneinheit (13, 22).

6. Verfahren nach Anspruch 5, wobei die zweite entfernte Maschineneinheit (13, 22) direkt oder indirekt mit der ersten Maschineneinheit (11) verbunden ist, und die zweite entfernte Maschineneinheit (13, 22) in der beweglichen Maschine (10) umfasst ist.

7. Verfahren nach einem der vorstehenden Ansprüche 5-6, wobei die zweite entfernte Maschineneinheit (13, 22) in einer entfernten beweglichen Maschine (20) umfasst ist, die von der beweglichen Maschine (10) getrennt ist.

8. Verfahren nach einem der vorstehenden Ansprüche 5-7, wobei das Verfahren weiter umfasst:
Bestimmen (316) einer funktionsfähigen relativen Position der ersten Maschineneinheit (11) und der ersten entfernten Maschineneinheit (12, 21) und/oder der zweiten entfernten Maschineneinheit (13, 22),
Bestimmen (318) von Antriebsbetriebsparametern für eine Antriebsanordnung (400) zum Antreiben der beweglichen Maschine (10) in die funktionsfähige relative Position,
Bestimmen (320) von Lenkbetriebsparametern für eine Lenkanordnung (500) zum Lenken der beweglichen Maschine (10) in die funktionsfähige relative Position,
Übertragen (321) der Antriebsbetriebsparameter und Lenkbetriebsparameter an die Antriebsanordnung bzw. Lenkanordnung zum Aktivieren der Antriebsanordnung bzw. Lenkanordnung.

9. Verfahren nach Anspruch 8, wobei die funktionsfähige relative Position auf einer Zuweisungsaufgabe der beweglichen Maschine (10) basiert, die eine Interaktion mit der entfernten beweglichen Maschine (20) erfordert, wobei die Antriebsbetriebsparameter und Lenkbetriebsparameter so bestimmt werden, dass eine Überlappung zwischen den abgebildeten vordefinierten Geometrien der ersten Maschineneinheit (11), der ersten entfernten Maschineneinheit (12, 21) und/oder der zweiten entfernten Maschineneinheit (13, 22) vermieden wird.

10. Verfahren nach einem der vorstehenden Ansprüche 5-9, wobei eine beliebige oder alle der ersten (101), zweiten (102) und dritten (103) Positionierungsvorrichtung, und der ersten (121, 201), zweiten (122, 202) und dritten (131, 221) entfernten Positionierungsvorrichtung Hochfrequenz-(HF)-Signaltransceiver sind.

11. System (100) zum relativen Positionieren relativ beweglicher Maschineneinheiten (11, 12, 13, 21, 22) zum Laden, umfassend mindestens eine erste Positionierungsvorrichtung (101), eine zweite Positionierungsvorrichtung (102) und eine dritte Positionierungsvorrichtung (103), die jeweils zum Empfangen und Senden von Positionierungsdaten umfassenden Positionierungssignalen konfiguriert sind, und an einer ersten, zweiten bzw. dritten vordefinierten lokalen Position auf einer ersten Maschineneinheit (11) einer beweglichen Maschine (10) angeordnet sind, wobei das System (100) umfasst:
eine Verarbeitungsschaltung (603); und
einen Speicher (604), wobei der Speicher (604) Anweisungen enthält, die von der Verarbeitungsschaltung (603) ausführbar sind, wodurch das System (100) funktionsfähig ist zum:
Empfangen (302) eines ersten Positionierungssignals über die erste Positionierungsvorrichtung (101) von einer ersten entfernten Positionierungsvorrichtung (121, 201), die an einer ersten entfernten Position angeordnet ist, die relativ zu der ersten, zweiten und dritten vordefinierten lokalen Position auf einer ersten entfernten Maschineneinheit (12, 21) beweglich ist,
Empfangen (304) eines zweiten Positionierungssignals von der ersten entfernten Positionierungsvorrichtung (121, 201) über die zweite Positionierungsvorrichtung (102),
Empfangen (306) eines dritten Positionierungssignals von der ersten entfernten Positionierungsvorrichtung (121, 201) über die dritte Positionierungsvorrichtung (103),
Empfangen (308) von Daten der ersten entfernten Maschineneinheit von der ersten entfernten Positionierungsvorrichtung (121, 201), die Daten zur Identifizierung der ersten entfernten Maschineneinheit (12, 21) und eine vordefinierte lokale Position der ersten entfernten Positionierungsvorrichtung (121, 201) auf der ersten entfernten Maschineneinheit (12, 21) umfassen,
Bestimmen (310) erster, zweiter und dritter Bereichsdaten (Rd₁, Rd₂, Rd₃), basierend auf dem ersten, zweiten bzw. dritten Positionierungssignal,
Bestimmen (312) einer relativen Position der ersten entfernten Positionierungsvorrichtung (121, 201) zur ersten, zweiten bzw. dritten vordefinierten lokalen Position, basierend auf den ersten, zweiten und dritten Bereichsdaten (Rd₁, Rd₂, Rd₃),
Abbilden (314) von Daten der ersten Maschineneinheit und Daten der ersten entfernten Maschineneinheit, die vordefinierte Geometrien (11', 12', 21') der ersten Maschineneinheit (11) bzw. der ersten entfernten Maschineneinheit (12, 21) in einer relativen Position umfassen, basierend auf der relativen Position der ersten entfernten Positionierungsvorrichtung (121, 201) zur ersten, zweiten bzw. dritten vordefinierten lokalen Position, und der vordefinierten lokalen Position der ersten entfernten Positionierungsvorrichtung (121, 201) auf der ersten entfernten Maschineneinheit (12, 21).

12. System (100) nach Anspruch 16, das weiter funktionsfähig zum Durchführen des Verfahrens nach einem der vorstehenden Ansprüche 2-10 ist.

13. Computerprogramm (605), das computerlesbare Codemittel umfasst, die in einem System (100) zum relativen Positionieren relativ beweglicher Maschineneinheiten (11, 12, 13, 21, 22) zum Laden ausgeführt werden sollen, wobei die computerlesbaren Codemittel, wenn sie im System (100) ausgeführt werden, das System (100) dazu veranlassen, das Verfahren nach einem der vorstehenden Ansprüche 1-10 auszuführen.

14. Träger, der das Computerprogramm (605) nach Anspruch 13 enthält, wobei der Träger ein computerlesbares Speichermedium ist.

15. Bewegliche Maschine (10, 20), umfassend ein System (100) zum relativen Positionieren relativ beweglicher Maschineneinheiten (11, 12, 13, 21, 22) zum Laden nach einem der vorstehenden Ansprüche 11-12.

## Revendications

1. Procédé réalisé par un système (100) de positionnement relatif d'unités (11, 12, 13, 21, 22) de machine relativement mobiles pour le chargement, comprenant au moins un premier dispositif de positionnement (101), un deuxième dispositif de positionnement (102) et un troisième dispositif de positionnement (103), configurés chacun pour recevoir et transmettre des signaux de positionnement comprenant des données de positionnement, agencés à de première, deuxième et troisième positions locales prédéfinies sur une première unité (11) de machine d'une machine mobile (10), respectivement, le procédé comprenant :
la réception (302) via le premier dispositif de positionnement (101) d'un premier signal de positionnement provenant d'un premier dispositif de positionnement distant (121, 201) agencé à une première position distante relativement mobile par rapport aux première, deuxième et troisième positions locales prédéfinies, sur une première unité (12, 21) de machine distante,
la réception (304) via le deuxième dispositif de positionnement (102) d'un deuxième signal de positionnement provenant du premier dispositif de positionnement distant (121, 201),
la réception (306) via le troisième dispositif de positionnement (103) d'un troisième signal de positionnement provenant du premier dispositif de positionnement distant (121, 201),
la réception (308) de premières données d'unité de machine distante en provenance du premier dispositif de positionnement distant (121, 201), comprenant des données d'identification de la première unité (12, 21) de machine distante et une position locale prédéfinie du premier dispositif de positionnement distant (121, 201) sur la première unité (12, 21) de machine distante,
la détermination (310) de premières, deuxièmes et troisièmes données de portée (Rd₁, Rd₂, Rd₃), sur la base des premiers, deuxièmes et troisièmes signaux de positionnement, respectivement,
la détermination (312) d'une position relative du premier dispositif de positionnement distant (121, 201) par rapport aux première, deuxième et troisième positions locales prédéfinies, respectivement, sur la base des premières, deuxièmes et troisièmes données de portée (Rd₁, Rd₂, Rd₃),
la cartographie (314) de premières données d'unité de machine et de premières données de machine distante comprenant des géométries prédéfinies (11', 12', 21') de la première unité (11) de machine et de la première unité (12, 21) de machine distante, respectivement, dans une position relative, sur la base de la position relative du premier dispositif de positionnement distant (121, 201) par rapport aux première, deuxième et troisième positions locales prédéfinies, respectivement, et de la position locale prédéfinie du premier dispositif de positionnement distant (121, 201) sur la première unité (12, 21) de machine distante.

2. Procédé selon la revendication 1, le procédé comprenant en outre :
la réception (322) via le premier dispositif de positionnement (101) d'un cinquième signal de positionnement provenant d'un deuxième dispositif de positionnement distant (122, 202) situé à une deuxième position distante relativement mobile par rapport aux première, deuxième et troisième positions locales prédéfinies, sur la première unité (12, 21) de machine distante,
la réception (324) via le deuxième dispositif de positionnement (102) d'un sixième signal de positionnement provenant du deuxième dispositif de positionnement distant (122, 202),
la réception (326) via le troisième dispositif de positionnement (103) d'un septième signal de positionnement provenant du deuxième dispositif de positionnement distant (122, 202),
la réception (328) de premières données d'unité de machine distante en provenance du deuxième dispositif de positionnement distant (122, 202) comprenant des données d'identification de la position locale prédéfinie du deuxième dispositif de positionnement distant (122, 202) dans la première unité (12, 21) de machine distante,
la détermination (330) de cinquièmes, sixièmes et septièmes données de portée (Rd₅, Rd₆, Rd₇), sur la base des cinquième, sixième et septième signaux de positionnement, respectivement,
la détermination (332) d'une position relative du deuxième dispositif de positionnement distant (122, 202) par rapport aux première, deuxième et troisième positions locales prédéfinies, respectivement, sur la base des cinquièmes, sixièmes et septièmes données de portée (Rd₅, Rd₆, Rd₇),
la cartographie (334) de premières données d'unité de machine et de premières données d'unité de machine distante comprenant des géométries prédéfinies (11', 12', 21') de la première unité (11) de machine et de la première unité (12, 21) de machine distante, respectivement, dans une position relative, sur la base en outre de la position relative du deuxième dispositif de positionnement distant (122, 202) par rapport aux première, deuxième et troisième positions locales prédéfinies, respectivement, et de la position locale prédéfinie du deuxième dispositif de positionnement distant (122, 202) sur la première unité (12, 21) de machine distante.

3. Procédé selon l'une quelconque des revendications précédentes, dans lequel la première unité (12) de machine distante est directement ou indirectement connectée à la première unité (11) de machine, et la première unité (11) de machine et la première unité (12) de machine distante sont incluses dans la machine mobile (10).

4. Procédé selon l'une quelconque des revendications précédentes, dans lequel la première unité (21) de machine distante est comprise dans une machine mobile distante (20), distincte de la machine mobile (10).

5. Procédé selon l'une quelconque des revendications précédentes, le procédé comprenant en outre :
la réception (342) via le premier dispositif de positionnement (101) d'un huitième signal de positionnement provenant d'un troisième dispositif de positionnement distant (131, 221) situé à une troisième position distante relativement mobile par rapport aux première, deuxième et troisième positions locales prédéfinies, sur une deuxième unité (13, 22) de machine distante,
la réception (344) via le deuxième dispositif de positionnement (102) d'un neuvième signal de positionnement provenant du troisième dispositif de positionnement distant (131, 221),
la réception (346) via le troisième dispositif de positionnement (103) d'un dixième signal de positionnement provenant du troisième dispositif de positionnement distant (131, 221),
la réception (348) de deuxièmes données d'unité de machine distante en provenance du troisième dispositif de positionnement distant (131, 221) comprenant des données d'identification de la deuxième unité (13, 22) de machine distante et une position locale prédéfinie du troisième dispositif de positionnement distant (131, 221) sur la deuxième unité (13, 22) de machine distante,
la détermination (350) de huitièmes, neuvièmes et dixièmes données de portée (Rd₈, Rd₉, Rd₁₀), sur la base des huitièmes, neuvièmes et dixièmes signaux de positionnement, respectivement,
la détermination (352) d'une position relative du troisième dispositif de positionnement distant (131, 221) par rapport aux première, deuxième et troisième positions locales prédéfinies, respectivement, sur la base des huitième, neuvième et dixième données de portée (Rd₈, Rd₉, Rd₁₀),
la cartographie (354) de premières données d'unité de machine et de deuxièmes données d'unité de machine distante comprenant des géométries prédéfinies (11', 13', 22') de la première unité (11) de machine et de la deuxième unité (13, 22) de machine distante, respectivement, dans une position relative, sur la base de la position relative du troisième dispositif de positionnement distant (131, 221) par rapport aux première, deuxième et troisième positions locales prédéfinies, respectivement, et de la position locale prédéfinie du troisième dispositif de positionnement distant (131, 221) sur la deuxième unité (13, 22) de machine distante.

6. Procédé selon la revendication 5, dans lequel la deuxième unité (13, 22) de machine distante est directement ou indirectement connectée à la première unité (11) de machine, et la deuxième unité (13, 22) de machine distante est comprise dans la machine mobile (10).

7. Procédé selon l'une quelconque des revendications 5 à 6 précédentes, dans lequel la deuxième unité (13, 22) de machine distante est comprise dans une machine mobile distante (20), distincte de la machine mobile (10).

8. Procédé selon l'une quelconque des revendications 5 à 7 précédentes, le procédé comprenant en outre :
la détermination (316) d'une position relative de fonctionnement de la première unité (11) de machine et de la première unité (12, 21) de machine distante et/ou de la deuxième unité (13, 22) de machine distante,
la détermination (318) de paramètres de fonctionnement d'entraînement pour un agencement d'entraînement (400), pour entraîner la machine mobile (10) dans la position relative de fonctionnement,
la détermination (320) de paramètres de fonctionnement de direction pour un agencement de direction (500) pour diriger la machine mobile (10) vers la position relative de fonctionnement,
la transmission (321) des paramètres de fonctionnement d'entraînement et des paramètres de fonctionnement de direction à l'agencement d'entraînement et à l'agencement de direction, respectivement, pour activer l'agencement d'entraînement et l'agencement de direction, respectivement.

9. Procédé selon la revendication 8, dans lequel la position relative de fonctionnement est basée sur une tâche d'affectation de la machine mobile (10) nécessitant une interaction avec la machine mobile distante (20), dans lequel les paramètres de fonctionnement d'entraînement et les paramètres de fonctionnement de direction sont déterminés pour éviter un chevauchement entre les géométries prédéfinies cartographiées de la première unité (11) de machine, de la première unité (12, 21) de machine distante et/ou de la deuxième unité (13, 22) de machine distante.

10. Procédé selon l'une quelconque des revendications 5 à 9 précédentes, dans lequel tout ou partie des premier (101), deuxième (102) et troisième (103) dispositifs de positionnement, et des premier (121, 201), deuxième (122, 202) et troisième (131, 221) dispositifs de positionnement distants est un émetteur-récepteur de signal radiofréquence (RF).

11. Système (100) de positionnement relatif d'unités (11, 12, 13, 21, 22) de machine relativement mobiles pour le chargement, comprenant au moins un premier dispositif de positionnement (101), un deuxième dispositif de positionnement (102) et un troisième dispositif de positionnement (103), configurés chacun pour recevoir et transmettre des signaux de positionnement comprenant des données de positionnement, agencés à de première, deuxième et troisième positions locales prédéfinies sur une première unité (11) de machine d'une machine mobile (10), respectivement, le système (100) comprenant :
un circuit de traitement (603) ; et
une mémoire (604), ladite mémoire (604) contenant des instructions exécutables par ledit circuit de traitement (603), dans lequel ledit système (100) fonctionne pour :
recevoir (302) via le premier dispositif de positionnement (101) un premier signal de positionnement provenant d'un premier dispositif de positionnement distant (121, 201) agencé à une première position distante relativement mobile par rapport aux première, deuxième et troisième positions locales prédéfinies, sur une première unité (12, 21) de machine distante,
recevoir (304) via le deuxième dispositif de positionnement (102) un deuxième signal de positionnement provenant du premier dispositif de positionnement distant (121, 201),
la réception (306) via le troisième dispositif de positionnement (103) d'un troisième signal de positionnement provenant du premier dispositif de positionnement distant (121, 201),
recevoir (308) de premières données d'unité de machine distante en provenance du premier dispositif de positionnement distant (121, 201), comprenant des données d'identification de la première unité (12, 21) de machine distante et une position locale prédéfinie du premier dispositif de positionnement distant (121, 201) sur la première unité (12, 21) de machine distante,
déterminer (310) de premières, deuxièmes et troisièmes données de portée (Rd₁, Rd₂, Rd₃), sur la base des premiers, deuxièmes et troisièmes signaux de positionnement, respectivement, déterminer (312) une position relative du premier dispositif de positionnement distant (121, 201) par rapport aux première, deuxième et troisième positions locales prédéfinies, respectivement, sur la base des premières, deuxièmes et troisièmes données de portée (Rd₁, Rd₂, Rd₃),
cartographier (314) de premières données d'unité de machine et de premières données d'unité de machine distante comprenant des géométries prédéfinies (11', 12', 21') de la première unité (11) de machine et de la première unité (12, 21) de machine distante, respectivement, dans une position relative, sur la base de la position relative du premier dispositif de positionnement distant (121, 201) par rapport aux première, deuxième et troisième positions locales prédéfinies, respectivement, et de la position locale prédéfinie du premier dispositif de positionnement distant (121, 201) sur la première unité (12, 21) de machine distante.

12. Système (100) selon la revendication 16, fonctionnant en outre pour réaliser le procédé selon l'une quelconque des revendications 2 à 10 précédentes.

13. Programme informatique (605) comprenant un code lisible par ordinateur destiné à être exécuté dans un système (100) pour le positionnement relatif d'unités (11, 12, 13, 21, 22) de machine relativement mobiles pour le chargement, lequel code lisible par ordinateur, lorsqu'il est exécuté dans le système (100), amène le système (100) à réaliser le procédé selon l'une quelconque des revendications 1 à 10 précédentes.

14. Support contenant le programme informatique (605) selon la revendication 13, dans lequel le support est un support de stockage lisible par un ordinateur.

15. Machine mobile (10, 20) comprenant un système (100) de positionnement relatif d'unités (11, 12, 13, 21, 22) de machine relativement mobiles pour le chargement selon l'une quelconque des revendications 11 à 12 précédentes.
